(19) **Europäisches Patentamt**
**European Patent Office**
**Office européen des brevets**

(11) **EP 3 899 502 B1**

(12) **EUROPÄISCHE PATENTSCHRIFT**

(45) Veröffentlichungstag und Bekanntmachung des Hinweises auf die Patenterteilung:
**01.05.2024 Patentblatt 2024/18**

(21) Anmeldenummer: **19832348.7**

(22) Anmeldetag: **19.12.2019**

(51) Internationale Patentklassifikation (IPC):
**G01N 21/64** (2006.01) **G02B 21/00** (2006.01)

(52) Gemeinsame Patentklassifikation (CPC):
**G02B 21/0032; G01N 21/6458; G02B 21/006; G02B 21/0076**

(86) Internationale Anmeldenummer:
**PCT/EP2019/086183**

(87) Internationale Veröffentlichungsnummer:
**WO 2020/127647 (25.06.2020 Gazette 2020/26)**

(54) **FLUORESZENZLICHTMIKROSKOPIE MIT ERHÖHTER AXIALER AUFLÖSUNG**

FLUORESCENT LIGHT MICROSCOPY WITH INCREASED AXIAL RESOLUTION

MICROSCOPIE À LUMIÈRE FLUORESCENTE AVEC RÉSOLUTION AXIALE AUGMENTÉE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **19.12.2018 DE 102018132875**

(43) Veröffentlichungstag der Anmeldung:
**27.10.2021 Patentblatt 2021/43**

(73) Patentinhaber: **Abberior Instruments GmbH
37077 Göttingen (DE)**

(72) Erfinder:
• **SCHÖNLE, Andreas
37085 Göttingen (DE)**
• **REUSS, Matthias
37083 Göttingen (DE)**

(74) Vertreter: **REHBERG HÜPPE + PARTNER
Patentanwälte PartG mbB
Robert-Gernhardt-Platz 1
37073 Göttingen (DE)**

(56) Entgegenhaltungen:
**WO-A2-2017/161055     US-A1- 2013 147 925
US-A1- 2014 346 328**

**Beschreibung**

### TECHNISCHES GEBIET DER ERFINDUNG

Die Erfindung bezieht sich auf ein Verfahren zum Ermitteln einer Verteilung von Fluoreszenzmarkern in einer Probe. Insbesondere bezieht sich die Erfindung auf ein Verfahren mit den Merkmalen des Oberbegriffs des unabhängigen Patentanspruchs 1. Weiterhin bezieht sich die Erfindung auf Fluoreszenzlichtmikroskope, die zum Ermitteln einer solchen Verteilung von Fluoreszenzmarkern in einer Probe einsetzbar sind. Insbesondere bezieht sich die Erfindung auf ein Fluoreszenzlichtmikroskop mit den Merkmalen des Oberbegriffs des unabhängigen Patentanspruchs 9.

Unter der interessierenden Verteilung von Fluoreszenzmarkern in einer Probe ist eine solche Verteilung zu verstehen, die aufgrund der Beugungsgrenze bei einer optischen Abbildung nicht in einzelne Fluoreszenzmarker auflösbar ist, weil die einzelnen Fluoreszenzmarker dichter als die Beugungsgrenze beieinander liegen. Dies schließt aber nicht aus, dass eine ermittelte Verteilung auch sogenannte vereinzelte Fluoreszenzmarker umfasst, die zu ihnen nächst benachbarten Fluoreszenzmarkern einen größeren Abstand als die Beugungsgrenze aufweisen.

Bei dem erfindungsgemäßen Verfahren werden in der Regel auch nicht, zum Beispiel durch Schalten der Fluoreszenzmarker zwischen einem fluoreszenten und einem nicht fluoreszenten Zustand, nacheinander Untergruppen der fluoreszenten Fluoreszenzmarker mit einer so geringen Dichte ausgebildet, dass sie untereinander größere Abstände als die Beugungsgrenze aufweisen. Dies schließt aber weder aus, dass die Fluoreszenzmarker, deren Verteilung erfindungsgemäß bestimmt wird, schaltbar sind, noch dass erfindungsgemäß jeweils nur die Verteilung einer Untergruppe der Fluoreszenzmarker bestimmt wird, die mit Hilfe eines die Fluoreszenzmarker zwischen einem fluoreszenten und einem nicht fluoreszenten Zustand überführenden Einstellsignals eingestellt wird.

Das erfindungsgemäße Ermitteln der Verteilung der Fluoreszenzmarker ist jedoch nicht darauf angewiesen, dass mit Hilfe eines Einstellsignals eine so geringe Dichte der fluoreszenten Fluoreszenzmarker eingestellt wird, dass die fluoreszenten Fluoreszenzmarker untereinander größere Abstände als die Beugungsgrenze aufweisen.

Weiterhin kann das erfindungsgemäße Ermitteln der Verteilung der Fluoreszenzmarker mit einer Genauigkeit diesseits oder jenseits der Beugungsgrenze durchgeführt werden. Entsprechend gibt es Ausführungsformen, die zur superhochauflösenden Fluoreszenzlichtmikroskopie zählen, und solche, bei denen dies nicht der Fall ist.

### STAND DER TECHNIK

Aus der US 8 693 742 B2 und der zugehörigen US 2010 / 0 278 400 A1 ist ein Verfahren zum dreidimensionalen Abbilden einzelner Fluoreszenzmarker mit einer Genauigkeit jenseits der Beugungsgrenze bekannt, bei dem eine sogenannte double helix PSF zur Anwendung kommt. Konkret werden die Phasenfronten des von den einzelnen Fluoreszenzmarkern stammenden Fluoreszenzlichts mit einer Phasenmaske derart verformt, dass die Punktverteilungsfunktion bei einer Abbildung der Fluoreszenzmarker auf einen Detektor von der z-Position der Fluoreszenzmarker abhängig ist. Konkret wird jeder Fluoreszenzmarker in zwei Spots auf dem Detektor abgebildet, die mit der z-Lage des jeweiligen Fluoreszenzmarkers um ihren gemeinsamen Schwerpunkt rotieren. So kann aus der Orientierung der Verbindungslinie der beiden Spots auf die z-Position des das Fluoreszenzlicht emittierenden Fluoreszenzmarkers geschlossen werden. Die US 8 693 742 B2 und die zugehörige US 2010 / 0 278 400 A1 vergleichen die aufgrund der double helix PSF auf dem Detektor registrierten Bilder mit solchen, die bei einer herkömmlichen Punktverteilungsfunktion erhalten werden und bei denen die Airy-Scheibe auf dem Detektor einen mit dem Abstand der Fluoreszenzmarker zur Fokalebene der Abbildung zunehmenden Durchmesser und eine mit diesem Abstand zunehmende Strukturierung aufweist. Grundsätzlich kann auch aus dem Durchmesser der Airy-Scheibe auf die Lage des das Fluoreszenzlicht emittierenden Fluoreszenzmarkers gegenüber der Fokalebene in z-Richtung rückgeschlossen werden. Dabei wird aber nicht aufgelöst, in welcher Richtung der jeweilige Fluoreszenzmarker von der Fokalebene beabstandet ist.

Aus der US 9 693 034 B2 ist ein Verfahren zum Lokalisieren von Fluoreszenzmarkern in drei Dimensionen unter Verwendung einer spiralförmigen Punktverteilungsfunktion bekannt, die sich wie eine Korkenzieherschraube längs der z-Richtung erstreckt. Ein Fluoreszenzmarker wird damit jeweils in einen Spot auf einen Detektor abgebildet, wobei dieser Spot mit der z-Lage des Fluoreszenzmarkers um eine Achse der spiralförmigen Punktverteilungsfunktion rotiert. Diese Hauptachse kann durch Abbilden des Fluoreszenzmarkers auf mehrere Detektoren oder Teilbereiche eines Detektors ermittelt werden, die in zu verschiedenen Fokalebenen äquivalenten Ebenen angeordnet sind. Die US 9 693 034 B2 führt aus, dass die spiralförmige Punktverteilungsfunktion außer zum parallelen Lokalisieren vieler Fluoreszenzmarker unter uniformer Weitfeldbeleuchtung auch zum Lokalisieren von Fluoreszenzmarkern in einem kleinen Volumen mit hoher Bildrate unter konfokaler Beleuchtung und Detektion verwendet werden kann. Die US 9 693 034 B2 befasst sich ausschließlich mit der Lokalisierung einzelner Fluoreszenzmarker, die in Abständen größer als die Beugungsgrenze bei ihrer Abbildung auf den Detektor angeordnet sind.

Aus der ebenfalls zur Patentfamilie der US 9 693 034 B2 gehörigen US 2013 / 0 147 925 A1 ist zusätzlich eine andere Strategie zur Verwendung einer spiralförmigen Punktverteilungsfunktion bekannt, die mit den anderen Ausführungsformen der Offenbarung dieses Dokuments kompatibel ist und räumlich strukturiertes Anregungslicht, wie solches, das bei der STED-Mikroskopie verwendet wird, verwendet, um die Fluoreszenz aus der Probe in seitlicher xy-Richtung einzugrenzen. Das räumlich strukturierte Anregungslicht soll unter Verwendung beispielsweise einer spiralförmigen oder Vortex-Phasen-Maske erzeugt werden. Die spiralförmige Punktverteilungsfunktion soll im Detektionspfad des Mikroskops verwendet werden, um auf die z-Position der emittierten Fluoreszenz zu schließen.

Aus der US 2011 / 0 249 866 A1 wird ein Verfahren zum dreidimensionalen Abbilden einzelner Fluoreszenzmarker beschrieben, wie es im voranstehenden Absatz erläutert wurde. Dabei wird die Möglichkeit angesprochen, die spiralförmige Punktverteilungsfunktion bei der Aufnahme von beliebigen Weitfeldbildern zu verwenden. Die resultierenden Weitfeldbilder werden nachbearbeitet, um sowohl eine Tiefenkarte als auch ein restauriertes Bild des jeweiligen Objekts zu erstellen, bei dem Auswirkungen eines Defokus korrigiert sind.

Aus S. Liu und H. Hua, "Extended depth-of-field microscopic imaging with a variable focus microscope objective", Optics Express, Vol. 19, No. 1, Januar 2011, 353-362 ist ein EDOF (extended depth-of-field) genanntes Verfahren bekannt, bei dem während jeder Belichtung eines Detektors der Fokus eines Fluoreszenzlichtmikroskops variiert wird und das so erhaltene Bild einer Probe bezüglich der Fokusvariation entfaltet wird, um die Probe schnell in allen drei Dimensionen abzubilden.

Aus S. Abrahamsson et al., "A new approach to extended focus for high-speed, high-resolution biological microscopy", in Three-Dimensional and Multidimensional Microscopy: Image Acquisition and Processing XIII, J-A Conchello et al., Eds., Proc. of SPIE Vol. 6090, 60900N, 2006, ist eine rotationssymmetrisch treppenförmige Phasenplatte zur Anordnung in einer Pupillenebene im Abbildungsstrahlengang eines Fluoreszenzlichtmikroskops bekannt. Die rotationssymmetrisch treppenförmige Phasenplatte bewirkt eine Streckung der PSF des Abbildungsstrahlengangs in z-Richtung. So werden auch Punkte der Probe, die von der Fokalebene weiter entfernt liegen, scharf, d. h. ohne Vergrößerung der resultierenden Airy-Scheibe auf einen Detektor abgebildet. Damit wird eine erhöhte Tiefenschärfe der Abbildung realisiert, aber keine Informationen über die jeweilige z-Lage eines Punkts der Probe gewonnen, der auf den Detektor abgebildet wird.

Aus C. J. R. Sheppard et al., "Optical Microscopy witht Extended Depth of Field", Proceedings of the Royal Society of London, Series A, Mathematical and Physical Sciences, Vol. 387, Issue 1792 (Mai 1983), Seiten 171-186 ist es bekannt, eine Probe in einem Fluoreszenzlichtmikroskop mit einem konfokal angeordneten Punktdetektor dreidimensional abzutasten und dann über verschiedene Probenschnitte aufgenommene Bilder unter Awendung eines speziellen Algorithmus aufzusummieren. Dieses Verfahren wird auch als Sheppard-Summe bezeichnet, und es liefert Bilder mit einer Auflösung quer zur Abbildungsrichtung, die besser als die klassische Beugungsgrenze ist.

Aus Carl Zeiss Microscopy GmbH, "The AiryScan Detector from Zeiss, Technical Note", Jena, Deutschland, 2015 ist ein Verfahren bekannt, bei dem ein konfokaler Punktdetektor bei einem Fluoreszenzlichtmikroskop durch einen Detektor ersetzt wird, dessen lichtempfindlicher Detektionsbereich in ein Feld von einzeln auslesbaren Teilbereichen unterteilt ist. Die mit den Teilbereichen des Detektors registrierten Lichtintensitäten werden mit einer Punktverteilungsfunktion der Abbildung auf den Detektor entfaltet. Auf diese Weise wird die zugrunde liegende Verteilung von Fluoreszenzmarkern in einer Probe lateral zur Abbildungsrichtung mit einer höheren Auflösung als der Beugungsgrenze und auch mit einer erhöhten Auflösung in der Abbildungsrichtung erhalten.

Bei der sogenannten STED-, GSD- oder RESOLFT-Fluoreszenzlichtmikroskopie wird eine bessere räumliche Auflösung als die Beugungsgrenze dadurch erzielt, dass die Abmessungen eines Emissionsbereichs in einer Probe, in welchem Fluoreszenzmarker zur Emission von Fluoreszenzlicht veranlasst werden, unter die Beugungsgrenze reduziert werden. Diese Reduzierung wird mit Hilfe von Fluoreszenzverhinderungslicht erreicht, das die Emission von Fluoreszenzlicht aus einem mit einer Teillichtintensitätsverteilung von Anregungslicht in der Probe ausgebildeten Anregungsbereich überall außerhalb eines lokalen Minimums einer Teillichtintensitätsverteilung des Fluoreszenzverhinderungslichts verhindert. Dieses lokale Minimum der Teillichtintensitätsverteilung des Fluoreszenzverhinderungslichts kann sowohl lateral zur jeweiligen Abbildungsrichtung auf einen Detektor als auch axial in dieser Abbildungsrichtung durch Intensitätsmaxima des Fluoreszenzverhinderungslichts begrenzt sein. Während jedoch die laterale Begrenzung des Emissionsbereichs durch eine ringförmige Intensitätsverteilung des Fluoreszenzverhinderungslichts relativ einfach bis weit unter die Beugungsgrenze hinab möglich ist, erweist sich eine ebenso starke axiale Eingrenzung des Emissionsbereichs als schwierig.

In der STED-, GSD- und RESOLFT-Scannig-Fluoreszenzlichtmikroskopie ist es bekannt, statt eines konfokal zu dem Emissionsbereich angeordneten Punktdetektors einen Detektor zu verwenden, dessen lichtempfindlicher Detektionsbereich in einzeln auslesbare Teilbereiche unterteilt ist. Dies kann zum Beispiel dazu genutzt werden, eine Blende mit variabler Öffnungsweite zu simulieren und/oder um einen Detektor in nicht entscannter Anordnung verwenden zu können, mit dem auch ein Weitfeldbild von der jeweiligen Probe aufgezeichnet werden kann.

Ein STED-Mikroskop mit einem Detektor, dessen lichtempfindlicher Detektionsbereich in mehrere einzeln auslesbare Teilbereiche unterteilt ist, ist beispielsweise aus der DE 10 325 460 A1 und der DE 10 2005 027 896 A1 bekannt.

Aus der WO 2015 / 121 188 A1 ist ein multifokales Fluoreszenzrastermikroskop mit einem Beobachtungsstrahlengang von einem Messvolumen bis zu einer Bildebene, einem Strahlvereiniger zur Ankopplung eines Beleuchtungssystems und mit einer in der Bildebene angeordneten Blende bekannt. Der Beobachtungsstrahlengang umfasst zwischen dem Strahlvereiniger und der Bildebene eine erste diffraktive Optik zur Aufspaltung von Lichtstrahlen in Strahlenbündel längs unterschiedlicher Beugungsordnungen, die den Lichtstrahlen eine von den anderen Beugungsordnungen unterschiedliche sphärische Phase aufprägt, eine zweite diffraktive Optik zur Kompensation chromatischer Abberationen der aufgespaltenen Strahlenbündel und eine Sammeloptik zur Fokussierung der aufgespaltenen Strahlenbündel in die Bildebene. Die Blende weist entweder eine Öffnung auf, und die Sammeloptik fokussiert jedes der aufgespaltenen Strahlenbündel der verschiedenen Beugungsanordnungen auf diese Öffnung, oder die Blende weist für jede der aufgespaltenen Beugungsordnungen eine jeweilige Öffnung auf, und die Sammeloptik fokussiert jedes der aufgespaltenen Strahlenbündel der verschiedenen Beugungsordnungen auf die betreffende Öffnung. Hinter der konfokalen Blende ist jeweils mindestens ein Detektor für jede der Beugungsordnungen angeordnet. Bei der Gesamtheit aller Detektoren kann es sich um eine Matrix von Einzelphotonenlawinendioden handeln. Bei einer Blende mit mehreren Öffnungen kann hinter jeder Öffnung der konfokalen Blende eine separate Matrix von Detektoren angeordnet sein, beispielsweise eine Matrix von Einzelphotonenlawinendioden. Mittels der diffraktiven Optiken wird der beleuchtete Ort der jeweiligen Probe in einer der Anzahl der Beugungsordnungen entsprechenden Anzahl verschiedenen Abbildungsrichtungen nebeneinander auf die Detektoren abgebildet. Das Beleuchtungssystem weist eine Optik zum Erweitern der Fokustiefe auf. Diese Optik erzeugt ein Beleuchtungsvolumen, dessen axiale Ausdehnung mindestens ein Fünffaches seiner lateralen Ausdehnung beträgt und für eine vorgegebene Anregungswellenlänge, eine vorgegebene numerische Apertur des Mikroskopobjektivs, eine vorgegebene konfokale Blendenöffnungsgröße und einen vorgegebenen Brechungsindex eines Immersionsmediums mindestens zwei optischen Schnittdicken des Mikroskops entspricht. Dadurch kann die diffraktive Optik zur Bereitstellung eines zur optischen Trennung ausreichenden axialen Abstands ausgebildet sein. Die Detektoren können zu einer räumlichen Überabtastung der Punktverteilungsfunktion in den Beugungsordnungen angeordnet sein, wie sie beispielsweise in "Super-resolution in confocal imaging" von Sheppard in "Optik", Band 80 (1988), Seite 53, beschrieben ist. Damit kann ein lateral höher aufgelöstes Bild ermittelt werden. Weiter kann die laterale Auflösung durch andere bekannte Methoden wie STED oder RESOLFT erhöht werden. Dazu werden zwei Beleuchtungsstrahlengänge bereitgestellt und mittels eines zusätzlichen Strahlvereinigers gekoppelt, so dass Licht aus beiden Beleuchtungsstrahlengängen zur Probe gelangt. Der erste Beleuchtungsstrahlengang erzeugt einen verlängerten objektseitigen Fokus zur Fluoreszenzanregung, beispielsweise mittels eines Besselstrahls. Der zweite Beleuchtungsstrahlengang erzeugt beispielsweise mittels einer Ringblende mit aufgeprägter Spiralphase einen selbstrekonstruierenden annularen Strahl, d. h. Besselstrahlen höherer Ordnung mit fehlendem zentralem Maximum, der dann zur Abregung der Fluoreszenz außerhalb des Zentrums dient. Mit dem bekannten multifokalen Fluoreszenzrastermikroskop kann zwar eine Probe in verschiedenen Fokalebenen gleichzeitig abgetastet werden. Die dabei erreichbare axiale Ortsauslösung geht aber nicht über diejenige eines konfokalen Fluoreszenzlichtmikroskops hinaus.

Aus der DE 10 2015 107 367 A1 ist ein Verfahren mit simultaner Anregung und Detektion der Fluoreszenz in verschiedenen Fokalebenen einer Probe mittels Laser-Scanning-Mikroskopie bekannt. Ein Beleuchtungsstrahl wird mit einem Objektiv in ein Messvolumen der Probe fokussiert, wobei der Beleuchtungsstrahl in einer Beleuchtungspupille eine strahlformende Phasenmaske zur Erzeugung eines langgestreckten Fokus durchläuft. Im Messvolumen erzeugtes Fluoreszenzlicht wird mittels des Objektivs gesammelt und kollimiert. Das Fluoreszenzlicht wird mittels einer diffraktiven Optik in Strahlenbündel unterschiedlicher Beugungsordnungen aufgespalten. Die unterschiedlichen Beugungsordnungen werden in verschiedenen Abbildungsrichtungen auf separate Detektorbereiche eines Detektorarrays abgebildet. Dabei prägt die diffraktive Optik den Lichtstrahlen jeder Beugungsordnung eine zu den anderen Beugungsordnungen unterschiedliche sphärische Phase auf, so dass Fluoreszenzlicht aus verschieden tiefen Fokalebenen des Messvolumens unterschiedlichen Beugungsordnungen zugeordnet wird. Um eine Photoneneffizienz von detektierten Fluoreszenzphotonen gegenüber dem voranstehend erläuterten Stand der Technik zu erhöhen, wird das Fluoreszenzlicht der verschiedenen Beugungsordnungen dann ohne konfokale Diskriminierung auf die separaten Detektorbereiche abgelenkt. Von den Detektorbereichen werden das Fluoreszenzlicht aus den zugeordneten Fokalebenen des Messvolumens sowie ein Fluoreszenz-Übersprechen aus unscharf abgebildeten benachbarten Fokalebenen des Messvolumens in elektronische Fluoreszenzsignale gewandelt. Die Fluoreszenzsignale, die aus unterschiedlichen Fokalebenen des Messvolumens stammen und längs der Beugungsordnungen durch das Übersprechen überlagert sind, werden mittels korrelationsbasierter Zuordnung der Fluoreszenzsignale auf Basis unterscheidbaren Blinkverhaltens von fluoreszierenden Farbstoffen im Messvolumen zu definierten Fokalebenen im Messvolumen zugeordnet.

## AUFGABE DER ERFINDUNG

Der Erfindung liegt die Aufgabe zugrunde, ein Verfahren und ein Fluoreszenzlichtmikroskop aufzuzeigen, die es erlauben, eine Verteilung von nicht vereinzelten Fluoreszenzmarkern in einer Probe auch in einer Abbildungsrichtung der Probe auf einen Detektor mit hoher Photoneneffizienz aber ohne korrelationsbasierte Zuordnung der Fluoreszenzsignale zu definierten Fokalebenen im Messvolumen mit einer so hohen Ortsauflösung zu ermitteln, dass die beugungsbegrenzte axiale Ortsauflösung konfokaler Fluoreszenzlichtmikroskope überschritten wird.

## LÖSUNG

Die Aufgabe der Erfindung wird durch ein Verfahren mit den Merkmalen des unabhängigen Patentanspruchs 1 und durch ein Fluoreszenzlichtmikroskop mit den Merkmalen des unabhängigen Patentanspruchs 9 gelöst. Bevorzugte Ausführungsformen des erfindungsgemäßen Verfahrens und des erfindungsgemäßen Fluoreszenzlichtmikroskops sind in den abhängigen Patentansprüchen definiert.

## BESCHREIBUNG DER ERFINDUNG

Bei einem erfindungsgemäßen Verfahren zum Ermitteln einer Verteilung von Fluoreszenzmarken in einer Probe, bei der die einzelnen Fluoreszenzmarker dichter als die Beugungsgrenze beieinander liegen, wird die Probe in einer Abbildungsrichtung auf einen Detektor abgebildet, dessen quer zur der Abbildungsrichtung verlaufender lichtempfindlicher Detektionsbereich in Teilbereiche unterteilt ist. Aus einer zu der Abbildungsrichtung gegenläufigen Beaufschlagungsrichtung wird die Probe mit einer Lichtintensitätsverteilung beaufschlagt, die einen räumlich begrenzten Emissionsbereich umfasst, in welchem die Fluoreszenzmarker zur Emission von Fluoreszenzlicht veranlasst werden. Dabei ist eine axiale Ausdehnung des Emissionsbereichs längs der Abbildungsrichtung mindestens 4-mal größer als eine laterale Ausdehnung des Emissionsbereichs in mindestens einer quer zu der Abbildungsrichtung verlaufenden Querrichtung. Aus den Teilbereichen des Detektors werden für mindestens eine Relativlage des Emissionsbereichs gegenüber der Probe Fluoreszenzlichtsignale ausgelesen und hinsichtlich der Verteilung der Fluoreszenzmarker in der Probe ausgewertet. Dabei wird mit einem zwischen der Probe und dem Detektor angeordneten nichtdiffraktiven optischen Element eine Punktverteilungsfunktion beim Abbilden der Probe in der Abbildungsrichtung auf den Detektor abhängig vom Ort in der Probe längs der Abbildungsrichtung zumindest in der mindestens einen auf den Detektor abgebildeten Querrichtung verformt und/oder verlagert, Für die mindestens eine Relativlage des Emissionsbereichs gegenüber der Probe wird die Verteilung der Fluoreszenzmarker längs der Abbildungsrichtung unter Auswerten der Fluoreszenzlichtsignale bestimmt, die aus denjenigen der Teilbereiche des Detektors ausgelesen wurden, welche in der auf den Detektor abgebildeten mindestens einen Querrichtung außerhalb eines Zentralbereichs liegen. Dieser Zentralbereich ist dadurch definiert, dass in ihn hinein alle Punkte des Emissionsbereichs jeweils mit einer nicht durch das nichtdiffraktive optische Element verformten und/oder verlagerten minimalen beugungsbegrenzten Punktverteilungsfunktion, die also nicht durch einen Defokus verbreitert ist, in der Abbildungsrichtung auf den Detektor abgebildet würden. Anders gesagt ergibt sich der Zentralbereich aus der Überlagerung aller minimal ausgedehnten, beugungsbegrenzten Abbilder aller Punkte des Emissionsbereichs, die unter Ausnutzung der numerischen Apertur des Abbildungssystems ohne das nichtdiffraktive optische Element bei jeweils optimaler Fokussierung erreichbar sind. Keine Berücksichtigung finden dabei Bereiche der Lichtintensitätsverteilung, mit denen die Probe beaufschlagt wird, ohne dass in ihnen Fluoreszenzmarker zu einer signifikanten, d. h. über das Rauschen hinausgehenden Emission von Fluoreszenzlicht veranlasst werden. Diese Bereiche zählen nicht zum Emissionsbereich. Der Zentralbereich ist anders gesagt eine Projektion des Emissionsbereichs in der Abbildungsrichtung auf den Detektor, die auch in der mindestens einen auf den Detektor abgebildeten Querrichtung um die Beugungsgrenze ausgedehnt ist. Diese Querrichtung, die auch als laterale Richtung oder x- oder y-Richtung bezeichnet wird, verläuft quer zur Abbildungsrichtung, die auch als axiale oder z-Richtung bezeichnet wird. Die Abbildungsrichtung muss dabei nicht genau in Richtung einer optischen Achse eines zum Abbilden verwendeten Objektivs verlaufen. Vielmehr kann die Abbildungsrichtung zu dieser optischen Achse geneigt sein. In der Regel ist ein etwaiger Neigungswinkel jedoch klein und er beträgt selten mehr als 30 und niemals mehr als 45°. Ebenso kann die der Abbildungsrichtung entgegen gerichtete Beaufschlagungsrichtung unter einem solchen Neigungswinkel zu der optischen Achse verlaufen. Insbesondere kann dadurch eine Haupterstreckungsrichtung des Emissionsbereichs unter einem Neigungswinkel zu der Abbildungsrichtung verlaufen, der aber ebenfalls typischerweise klein ist, selten mehr als 30° beträgt und niemals mehr als 45° beträgt. In jedem Fall ist die axiale Ausdehnung des Emissionsbereichs längs der Abbildungsrichtung mindestens 4-mal größer als seine laterale Ausdehnung in der mindestens einen Querrichtung, die quer, d. h. unter einem Winkel von mindestens 45°, typischerweise unter einem Winkel von etwa 90° zu der Abbildungsrichtung verläuft. Dies ist gleichbedeutend damit, dass die Ausdehnung des Emissionsbereichs in der Querrichtung verglichen mit seiner Ausdehnung in der Abbildungsrichtung klein ist. Die auf den Detektor abgebildete mindestens eine Querrichtung ist damit frei für das Erfassen einer Intensitätsverteilung des Fluoreszenzlichts über den lichtempfindlichen Detektionsbereich des Detektors, die nicht auf die Abmessungen des Emissionsbereichs quer zu der Abbildungsrichtung zurückgeht, sondern auf unterschiedliche Orte in der Abbildungsrichtung, von denen aus das Fluoreszenzlicht aus dem Emissionsbereich emittiert wird. Durch die Verformung und/oder Verlagerung der Punktverteilungsfunktion beim Abbilden der Probe in der Abbildungsrichtung auf den Detektor durch das nichtdiffraktive optische Element wird das Fluoreszenzlicht aus dem Emissionsbereich mit einer Intensitätsverteilung abgebildet, die in der auf den Detektor abgebildeten Querrichtung über den Zentralbereich hinaus geht und die und/oder deren Lage von der Verteilung der Fluoreszenzmarker in dem Emissionsbereich längs der Abbildungsrichtung abhängt. Damit lässt diese Intensitätsverteilung in der auf den Detektor abgebildeten Querrichtung einen Rückschluss auf die Verteilung der Fluoreszenzmarker in dem Emissionsbereich längs der Abbildungsrichtung zu. Die Intensitätsverteilung des Fluoreszenzlichts in der auf den Detektor abgebildeten Querrichtung wird dazu aus den Fluoreszenzlichtsignalen der in dieser Querrichtung verteilten Teilbereiche des Detektors abgeleitet. Die zu dieser Intensitätsverteilung des Fluoreszenzlichts gehörige Lage der Fluoreszenzmarker in der Probe in der mindestens einen Querrichtung ergibt sich hingegen aus der Lage des Emissionsbereichs in der Probe in dieser Querrichtung, und da der Emissionsbereich in der mindestens einen Querrichtung nur die kleine laterale Ausdehnung aufweist, ist die Lage der Fluoreszenzmarker in dieser Querrichtung entsprechend genau bestimmt.

Im Gegensatz zu dem aus der WO 2015 / 121188 A1 bekannten multifokalen Fluoreszenzrastermikroskop und dem aus der DE 10 2015 107 367 A1 bekannten Laserscanningmikroskop wird bei der Erfindung kein diffraktives optisches Element verwendet, und die Probe wird nur aus einer einzigen Abbildungsrichtung auf die Teilbereiche des Detektors abgebildet, deren Fluoreszenzlichtsignale für das Bestimmen der Verteilung der Fluoreszenzmarker längs der Abbildungsrichtung ausgewertet werden. So müssen insbesondere keine Fluoreszenzlichtsignale, die zu verschiedenen Abbildungsrichtungen ausgelesen werden, korreliert werden, um sie bestimmten Fokalebenen zuzuordnen. Die Erfindung verzichtet vielmehr auf eine Unterscheidung zwischen einer festen Anzahl von Fokalebenen und erreicht gerade dadurch eine hohe Ortsauflösung längs der Abbildungsrichtung.

Um die Verteilung der Fluoreszenzmarker über die gesamte Probe oder doch zumindest einen größeren dreidimensionalen Bereich der Probe hinweg zu ermitteln, kann die Probe bei dem erfindungsgemäßen Verfahren mit dem Emissionsbereich in der mindestens einen Querrichtung abgetastet werden. Die Verteilung der Fluoreszenzmarker längs der mindestens einen Querrichtung kann dann unter Auswerten der Fluoreszenzlichtsignale bestimmt werden, die aus den Teilbereichen des Detektors für verschiedene Relativlagen des Emissionsbereichs gegenüber der Probe in der mindestens einen Querrichtung ausgelesen werden. Das erfindungsgemäße Verfahren kann aber beispielsweise auch dazu genutzt werden, die Verteilung der Fluoreszenzmarker über den Emissionsbereich in einer oder wenigen einzelnen Relativpositionen des Emissionsbereichs gegenüber der Probe zu bestimmen. Dabei kann bei einem nur in der mindestens einen Querrichtung eingegrenzten Emissionsbereich die Verteilung der Fluoreszenzmarker in der dazu orthogonalen Querrichtung aus den Fluoreszenzlichtsignalen bestimmt werden, die aus den Teilbereichen des Detektors ausgelesen werden, welche in der auf den Detektor abgebildeten orthogonalen Querrichtung verteilt angeordnet sind.

Bei dem erfindungsgemäßen Verfahren kann die axiale Ausdehnung des Emissionsbereichs längs der Abbildungsrichtung um den Faktor von mindestens 4 aber auch größer sein als eine weitere laterale Ausdehnung des Emissionsbereichs in der quer zu der Abbildungsrichtung und orthogonal zu der mindestens einen Querrichtung verlaufenden weiteren Querrichtung. Dann ist der Emissionsbereich von im Wesentlichen eindimensionaler Erstreckung, und die Lage der Fluoreszenzmarker in der Probe, die zu den für eine Relativstellung des Emissionsbereichs gegenüber der Probe ausgelesenen Fluoreszenzlichtsignalen beigetragen haben, kann in beiden Querrichtungen aus der Lage des Emissionsbereichs in der Probe abgeleitet werden, während ihre Verteilung längs der Abbildungsrichtung unter Auswerten der Fluoreszenzlichtsignale bestimmt werden kann, die aus denjenigen der Teilbereiche des Detektors ausgelesen werden, welche in der auf den Detektor ausgebildeten mindestens einen Querrichtung und der auf den Detektor ausgebildeten weiteren Querrichtung außerhalb des Zentralbereichs liegen.

Es versteht sich, dass die Probe mit einem solchen längs der Abbildungsrichtung gestreckten Emissionsbereich sowohl in der mindestens einen Querrichtung als auch in der weiteren Querrichtung abgetastet werden kann. Dabei kann die Verteilung der Fluoreszenzmarker in der mindestens einen Querrichtung und in der weiteren Querrichtung unter Auswerten der Fluoreszenzlichtsignale bestimmt werden, die für verschiedene Relativlagen des Emissionsbereichs gegenüber der Probe in der mindestens einen Querrichtung und in der weiteren Querrichtung aus den Teilbereichen des Detektors ausgelesen werden. Es versteht sich aber auch, dass der Scan auf eine der beiden Querrichtungen beschränkt sein kann.

In jedem Fall können für das Bestimmen der Verteilung der Fluoreszenzmarker längs der jeweiligen Querrichtung die für die jeweilige Relativlage des Emissionsbereichs gegenüber der Probe aus den Teilbereichen des Detektors, die in der jeweiligen auf den Detektor abgebildeten Querrichtung verteilt sind, ausgelesenen Fluoreszenzsignale aufsummiert werden. D. h., für das Bestimmen der Verteilung der Fluoreszenzmarker in der jeweiligen Querrichtung wird die Aufteilung des lichtempfindlichen Detektionsbereichs des Detektors in mehrere Teilbereiche nicht genutzt.

Bei dem erfindungsgemäßen Verfahren kann die axiale Ausdehnung des Emissionsbereichs längs der Abbildungsrichtung auch um mehr als den Faktor von mindestens 4 größer sein als die oder jede laterale Ausdehnung des Emissionsbereichs in der oder jeder quer zu der Abbildungsrichtung verlaufenden Querrichtung. So kann der Faktor der Ausdehnungen auch mehr als 10, mehr als 100 oder mehr als 1.000 betragen. Meist wird der Faktor der Ausdehnungen aber nicht größer als 10.000 sein. Eine natürliche absolute Obergrenze für die axiale Ausdehnung des Emissionsbereichs längs der Abbildungsrichtung ist der Arbeitsabstand eines zur Abbildung der Probe verwendeten Objektivs. Eine natürliche Untergrenze für die für die axiale Ausdehnung des Emissionsbereichs längs der Abbildungsrichtung ist die Beugungsgrenze.

Mit dem zwischen der Probe und dem Detektor angeordneten nichtdiffraktiven optischen Element erfolgt die Verformung oder Verlagerung der beim Abbilden der Probe in der Abbildungsrichtung auf den Detektor wirksamen Punktverteilungsfunktion mit der Änderung des Orts in der Probe längs der Abbildungsrichtung vorzugsweise stetig.

Das nichtdiffraktive optische Element kann insbesondere eine Phasenmaske sein, mit der eine *double helix PSF,* eine schraubenförmig um die Abbildungsrichtung rotierende Punktverteilungsfunktion oder eine *self bending PSF* verwendet werden. Dabei sind sowohl diese Punktverteilungsfunktionen als auch die zu ihrer Realisation verwendbaren Phasenmasken dem Fachmann bekannt. Das jeweilige optische Element bewirkt eine noch stärkere Kodierung der z-Positionen der jeweiligen Fluoreszenzmarker in der Verteilung der Fluoreszenzlichtsignale über die jeweils auf den Detektor abgebildete Querrichtung. Bei allen Punktverteilungsfunktionen, die eine Rotation der Fluoreszenzlichtverteilung über den Detektor mit variierender z-Position umfassen, ist es vorteilhaft, wenn der Emissionsbereich sowohl in der mindestens einen Querrichtung als auch in der dazu orthogonalen weiteren Querrichtung, und damit in allen lateralen Richtungen eingegrenzt ist.

Je stärker der Emissionsbereich in der oder jeder Querrichtung zu der Abbildungsrichtung auf kleine laterale Ausdehnungen eingegrenzt wird, desto mehr wird diese Querrichtung frei für das Erfassen der Intensitätsverteilung des Fluoreszenzlichts über den lichtempfindlichen Detektionsbereich des Detektors, die nicht auf die Abmessungen des Emissionsbereichs quer zu der Abbildungsrichtung zurückgeht, sondern auf unterschiedliche Orte der Fluoreszenzmarker in der Abbildungsrichtung. Daher ist es vorteilhaft, dass die Abmessungen des Emissionsbereichs in der oder jeder Querrichtung zu der Abbildungsrichtung bis unter die Beugungsgrenze reduziert werden.

Das Eingrenzen des Emissionsbereichs in der mindestens einen Querrichtung und ggf. auch in der weiteren Querrichtung auf sehr kleine laterale Ausdehnungen erfolgt besonders effektiv, indem die Lichtintensitätsverteilung in der Probe aus Fluoreszenzanregungslicht und Fluoreszenzverhinderungslicht ausgebildet wird, wobei eine Teillichtintensitätsverteilung des Fluoreszenzverhinderungslichts den Emissionsbereich in der mindestens einen Querrichtung gegenüber einem Anregungsbereich einer Teillichtintensitätsverteilung des Fluoreszenzanregungslichts einengt, wie dies zum Beispiel aus der STED-, GST- und RESOLFT-Fluoreszenzlichtmikroskopie bekannt ist. Die Teillichtintensitätsverteilung des Fluoreszenzverhinderungslichts engt den Emissionsbereich in der mindestens einen Querrichtung bis auf nicht mehr als die Hälfte oder ein Viertel oder ein Zehntel eines beugungsbegrenzten Anregungsbereichs der Teillichtintensitätsverteilung des Fluoreszenzanregungslichts ein. Durch dieses Einengen der lateralen Abmessungen des Emissionsbereichs unter die Beugungsgrenze wird die Lage der Fluoreszenzmarker in den Querrichtungen zu der Abbildungsrichtung mit einer Genauigkeit besser als die Beugungsgrenze bestimmt. In der Abbildungsrichtung kann die Genauigkeit auch gegenüber konfokaler Fluoreszenzlichtmikroskopie verbessert werden. Dies gilt auch gegenüber konfokaler Fluoreszenzlichtmikroskopie mit durch den sogenannten AiryScan maximierter Ortsauflösung. Ein weiterer, von der Genauigkeit in Abbildungsrichtung unabhängiger Vorteil besteht darin, dass die Verteilung der Fluoreszenzmarker in der Abbildungsrichtung ohne resultierende Verzögerung zusätzlich bestimmt werden kann.

Bei dem erfindungsgemäßen Verfahren kann das Verhältnis der axialen Ausdehnung des Emissionsbereichs längs der Abbildungsrichtung zur Ausdehnung des Emissionsbereichs in der mindestens einen Querrichtung nicht nur dadurch vergrößert werden, dass seine laterale Ausdehnung in der mindestens einen Querrichtung reduziert wird. Die axiale Ausdehnung kann auch gezielt absolut vergrößert werden, beispielsweise durch Formen des Lichts, mit dem die Probe beaufschlagt wird, zu einem Bessel-Strahl und/oder durch Formen des Lichts mit einem Axicon oder einem Prisma. Auch ein schnelles Scannen der Probe mit der Lichtintensitätsverteilung längs der optischen Achse, das beim Registrieren der Fluoreszenzlichtsignale mit den Teilbereichen des Detektors nicht zeitlich aufgelöst wird, ist zu diesem Zweck möglich.

Das Bestimmen der Verteilung des Fluoreszenzmarker längs der Abbildungsrichtung für die mindestens eine Relativlage des Emissionsbereichs gegenüber der Probe kann insbesondere ein Anfitten einer Modellfunktion an die Fluoreszenzlichtsignale umfassen, die aus den Teilbereichen des Detektors ausgelesen werden. Diese Modellfunktion weist als Argument die interessierende Verteilung auf und zeigt die daraus aufgrund der beim Abbilden der Probe auf den Detektor wirksamen Punktverteilungsfunktion resultierende Verteilung des Fluoreszenzlichts über die Teilbereiche des Detektors bzw. deren Fluoreszenzlichtsignale an. Das Anfitten der Modellfunktion hat das Ziel, eine Verteilung der Fluoreszenzmarker zu finden, die als Argument der Modellfunktion zu einer möglichst kleinen Abweichung von den ausgelesenen Fluoreszenzlichtsignalen, d. h. einem möglichst kleinen quadratischen Fehler führt. Hierbei handelt es sich um eine leicht beherrschbare Optimierungsaufgabe.

Ein erfindungsgemäßes Fluoreszenzlichtmikroskop weist einen Probenhalter, ein Objektiv mit einer optischen Achse, einen Detektor, der in einer Bildebene des Objektivs angeordnet ist und dessen lichtempfindlicher Detektionsbereich in der Bildebene in mehrere Teilbereiche unterteilt ist, die Fluoreszenzlichtsignale bereitstellen, sowie eine Lichtquelle auf, die eine von dem Probenhalter gehaltene Probe durch das Objektiv mit Licht beaufschlagt. Dabei umfasst eine Lichtintensitätsverteilung in der Probe einen räumlich begrenzten Emissionsbereich, in welchem die Fluoreszenzmarker zur Emission von Fluoreszenzlicht veranlasst werden. Eine axiale Ausdehnung des Emissionsbereichs längs der optischen Achse ist mindestens 4-mal größer als eine laterale Ausdehnung des Emissionsbereichs in mindestens einer quer zu der optischen Achse verlaufenden Querrichtung. Ein Scanner des Fluoreszenzlichtmikroskops verlagert den Emissionsbereich gegenüber der Probe. Registriereinrichtungen registrieren die Fluoreszenzlichtsignale für eine jeweilige Relativlage des Emissionsbereichs gegenüber der Probe, und Auswerteeinrichtungen werten die Fluoreszenzlichtsignale hinsichtlich der Verteilung der Fluoreszenzmarker in der Probe aus. Das erfindungsgemäße Fluoreszenzlichtmikroskop ist dadurch gekennzeichnet dass zwischen dem Objektiv und dem Detektor ein nichtdiffraktives optisches Element angeordnet ist, das dazu ausgebildet ist, eine Punktverteilungsfunktion beim Abbilden der Probe mit dem Objektiv in der Abbildungsrichtung auf den Detektor abhängig vom Ort längs der optischen Achse in der mindestens einen Querrichtung zu verformen und/oder zu verlagern, und dass die Auswerteeinrichtungen die Verteilung der Fluoreszenzmarker in der Probe längs der optischen Achse für die jeweilige Relativlage des Emissionsbereichs gegenüber der Probe unter Auswerten der Fluoreszenzlichtsignale bestimmen, die von denjenigen der Teilbereiche des Detektors bereitgestellt wurden, welche in der auf den Detektor abgebildeten mindestens einen Querrichtung außerhalb eines Zentralbereichs liegen, in den alle Punkte des Emissionsbereichs jeweils mit einer nicht durch das nichtdiffraktive optische Element verformten und/oder verlagerten minimalen beugungsbegrenzten Punktverteilungsfunktion, die also nicht durch einen Defokus verbreitert ist, in der Abbildungsrichtung auf den Detektor abgebildet werden.

Die vorzugsweise stetige Verformung oder Verlagerung der Punktverteilungsfunktion durch das nichtdiffraktive optische Element abhängig vom Ort in der Probe längs der optischen Achse ermöglicht es den Auswerteeinrichtungen, die Verteilung der Fluoreszenzmarker in der Probe längs der optischen Achse für die jeweilige Relativlage des Emissionsbereichs gegenüber der Probe zu bestimmen.

Geeignete optische Elemente, um die Punktverteilungsfunktion beim Abbilden der Probe mit dem Objektiv in der Abbildungsrichtung auf den Detektor abhängig vom Ort längs der optischen Achse in der mindestens einen Querrichtung stetig zu verformen und/oder zu verlagern, umfassen solche, die die Punktverteilungsfunktion gegenüber einer axialen Symmetrie in der mindestens einen Querrichtung verkippen, so dass die resultierende Verlagerung des Abbildens in der Querrichtung ein Rückschluss auf die z-Position zulässt. Geeignet sind weiterhin optische Elemente, die eine sogenannte *self bending PSF,* eine sogenannte rotierende PSF oder eine sogenannte *double helix PSF* erzeugen. Weiterhin können optische Elemente eingesetzt werden, die eine sogenannte *conical diffraction* bewirken. Auch mit einem Axicon oder einem Prisma kann die gewünschte Verformung bzw. Verlagerung der PSF erreicht werden, ebenso mit einem optischen Element, dass gezielt einen Astigmatismus in die Abbildung einführt.

Vorzugsweise ist der lichtempfindliche Detektionsbereich bei dem erfindungsgemäßen Fluoreszenzlichtmikroskopen in der auf den Detektor abgebildeten mindestens einen Querrichtung mindestens 2-mal so groß wie der Zentralbereich, in den alle Punkte des Emissionsbereichs jeweils mit der beugungsbegrenzten Punktverteilungsfunktion auf den Detektor abgebildet werden. Es versteht sich, dass die Größe des Detektionsbereichs in der mindestens einen Querrichtung auf die effektive Punktverteilungsfunktion, d. h. deren maximale Verformung und/oder Verlagerung in der mindestens einen Querrichtung abzustimmen ist, um die in dieser Verformung bzw. Verlagerung enthaltene Information registrieren zu können. Weiterhin versteht sich, dass bei einer Punktverteilungsfunktion, die ihre Orientierung um die Abbildungsrichtung auf den Detektor mit sich änderndem Ort längs der optischen Achse ändert, der Detektionsbereich und seine Unterteilung in die Teilbereiche darauf abgestimmt sein kann, eben diese Änderung besonders gut zu erfassen. Beispielsweise kann der Detektor eine ringförmige Anordnung von Teilbereichen seines lichtempfindlichen Detektionsbereichs aufweisen.

Eine Punktverteilungsfunktion, deren Orientierung um die Abbildungsrichtung sich mit dem Ort längs der Abbildungsrichtung ändert, ist vorteilhaft nutzbar, wenn die Lichtquelle nicht nur dazu ausgebildet ist, die Lichtintensitätsverteilung in der Probe in der mindestens einen Querrichtung einzuschränken, sondern so auszubilden, dass die axiale Ausdehnung des Emissionsbereichs längs der optischen Achse des Objektivs um mindestens einen Faktor 4 größer ist als jede laterale Ausdehnung des Anregungsbereichs in jeder quer zu der optischen Achse verlaufenden Querrichtung. Dazu passt dann, wenn der lichtempfindliche Detektionsbereich in beiden Dimensionen der Bildebene des Objektivs in mehrere lichtempfindliche Teilbereiche unterteilt ist.

Die Lichtquelle ist dazu ausgebildet, die Lichtintensitätsverteilung in der Probe aus Fluoreszenzanregungslicht und Fluoreszenzverhinderungslicht auszubilden, wobei eine Teillichtintensitätsverteilung des Fluoreszenzverhinderungslichts den Emissionsbereich in der mindestens einen Querrichtung bis auf nicht mehr als die Hälfte eines beugungsbegrenzten Anregungsbereichs einer Teillichtintensitätsverteilung des Fluoreszenzanregungslichts einengt. Dabei ist die Lichtquelle vorzugsweise dazu ausgebildet, dass die Teillichtintensitätsverteilung des Fluoreszenzverhinderungslichts den Emissionsbereich in der mindestens einen Querrichtung bis auf nicht mehr als ein Viertel oder ein Zehntel des beugungsbegrenzten Anregungsbereichs der Teillichtintensitätsverteilung des Fluoreszenzanregungslichts einengt.

Mögliche Alternative oder zusätzliche Maßnahmen, um den Anregungsbereich längs der optischen Achse auszuweiten, wurden bereits im Zusammenhang mit dem erfindungsgemäßen Verfahren erläutert.

Vorteilhafte Weiterbildungen der Erfindung ergeben sich aus den Patentansprüchen, der Beschreibung und den Zeichnungen. Die in der Beschreibung genannten Vorteile von Merkmalen und von Kombinationen mehrerer Merkmale sind lediglich beispielhaft und können alternativ oder kumulativ zur Wirkung kommen, ohne dass die Vorteile zwingend von erfindungsgemäßen Ausführungsformen erzielt werden müssen. Ohne dass hierdurch der Gegenstand der beigefügten Patentansprüche verändert wird, gilt hinsichtlich des Offenbarungsgehalts der ursprünglichen Anmeldungsunterlagen und des Patents Folgendes: weitere Merkmale sind den Zeichnungen - insbesondere den dargestellten Geometrien und den relativen Abmessungen mehrerer Bauteile zueinander sowie deren relativer Anordnung und Wirkverbindung - zu entnehmen. Die Kombination von Merkmalen unterschiedlicher Ausführungsformen der Erfindung oder von Merkmalen unterschiedlicher Patentansprüche ist ebenfalls abweichend von den gewählten Rückbeziehungen der Patentansprüche möglich und wird hiermit angeregt. Dies betrifft auch solche Merkmale, die in separaten Zeichnungen dargestellt sind oder bei deren Beschreibung genannt werden. Diese Merkmale können auch mit Merkmalen unterschiedlicher Patentansprüche kombiniert werden. Ebenso können in den Patentansprüchen aufgeführte Merkmale für weitere Ausführungsformen der Erfindung entfallen.

Die in den Patentansprüchen und der Beschreibung genannten Merkmale sind bezüglich ihrer Anzahl so zu verstehen, dass genau diese Anzahl oder eine größere Anzahl als die genannte Anzahl vorhanden ist, ohne dass es einer expliziten Verwendung des Adverbs "mindestens" bedarf. Wenn also beispielsweise von einem optischen Element die Rede ist, ist dies so zu verstehen, dass genau ein optisches Element, zwei optische Elemente oder mehr optische Elemente vorhanden sind. Die in den Patentansprüchen angeführten Merkmale können durch andere Merkmale ergänzt werden oder die einzigen Merkmale sein, die das jeweilige Verfahren oder Fluoreszenzlichtmikroskop aufweist.

Die in den Patentansprüchen enthaltenen Bezugszeichen stellen keine Beschränkung des Umfangs der durch die Patentansprüche geschützten Gegenstände dar. Sie dienen lediglich dem Zweck, die Patentansprüche leichter verständlich zu machen.

## KURZBESCHREIBUNG DER FIGUREN

Im Folgenden wird die Erfindung anhand in den Figuren dargestellter bevorzugter Ausführungsbeispiele weiter erläutert und beschrieben.

Fig. 1    zeigt schematisch ein erfindungsgemäßes Fluoreszenzlichtmikroskop zur Durchführung einer Ausführungsform des erfindungsgemäßen Verfahrens.

Fig. 2    zeigt konkretisierte Teile des Fluoreszenzlichtmikroskops gemäß Fig. 1 in einer perspektivischen Ansicht.

Fig. 3    erläutert das Funktionsprinzip eines bei der Erfindung zur Anwendung kommenden, aus dem Stand der Technik grundsätzlich bekannten optischen Elements.

Fig. 4A    zeigt, wie das optische Element in einer ersten Ausführungsform Amplitude und Phase von Fluoreszenzlicht moduliert.

Fig. 4B    zeigt die sich durch die Modulationen gemäß Fig. 4A ergebende Punktverteilungsfunktion in einem Schnitt in Abbildungsrichtung.

Fig. 5A    zeigt die Modulation der Phase durch eine weitere Ausführungsform eines optischen Elements gemäß Fig. 3.

Fig. 5B    illustriert die aus der Modulation gemäß Fig. 5A resultierende Punktverteilungsfunktion in Form verschiedener Schnitte quer zur Abbildungsrichtung; und

Fig. 6    illustriert ein weiteres erfindungsgemäßes Fluoreszenzlichtmikroskop bei der Durchführung einer weiteren Ausführungsform des erfindungsgemäßen Verfahrens.

## FIGURENBESCHREIBUNG

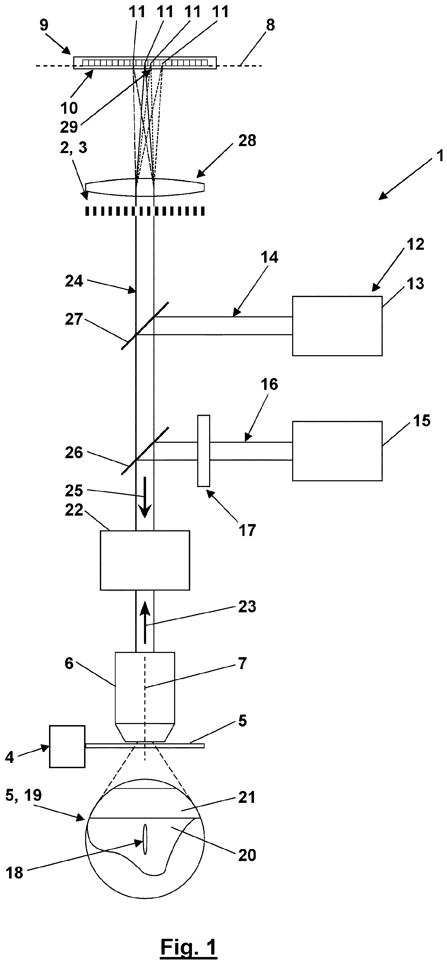

Das in **Fig. 1** dargestellte Fluoreszenzlichtmikroskop 1 basiert auf einem STED- oder RESOLFT-Fluoreszenzlichtmikroskop und unterscheidet sich von diesem durch ein zusätzliches optisches Element 2, insbesondere in Form eines Phasenfilters 3, das noch näher erläutert werden wird. Das Fluoreszenzlichtmikroskop 1 weist einen hier nur sehr schematisch dargestellten Probenhalter 4, der eine Probe 5 hält, ein Objektiv 6 mit einer optischen Achse 7 und einen in einer Bildebene 8 des Objektivs 6 angeordneten Detektor 9 auf. Ein lichtempfindlicher Detektionsbereich 10 des Detektors 9 ist in der Bildebene 8 in mehrere Teilbereiche 11 unterteilt. Die Teilbereiche 11 stellen jeweils abhängig von dem auf sie einfallenden Licht ein Fluoreszenzlichtsignal bereit. Weiterhin umfasst das Fluoreszenzlichtmikroskop 1 eine Lichtquelle 12 mit einer ersten Teillichtquelle 13, die Fluoreszenzanregungslicht 14 bereitstellt, sowie einer zweiten Teillichtquelle 15, die Fluoreszenzverhinderungslicht 16 bereitstellt. Phasenfronten des Fluoreszenzverhinderungslichts 16 werden mit einem Phasenfilter 17, beispielsweise einem sogenannten Vortex-Phasenfilter so verformt, dass ein größerer Anregungsbereich, in dem das Fluoreszenzanregungslicht 14 in der Probe 5 enthaltene Fluoreszenzmarker grundsätzlich zur Emission von Fluoreszenzlicht anregt, auf einen kleineren Emissionsbereich 18 eingengt wird, indem das Fluoreszenzverhinderungslicht 16 überall außerhalb des Emissionsbereichs 18 die Emission von Fluoreszenzlicht durch die Fluoreszenzmarker verhindert. Dies kann beispielsweise dadurch geschehen, dass die angeregten Fluoreszenzmarker durch das Fluoreszenzverhinderungslicht 16 zu stimulierter Emission veranlasst oder in einen nicht fluoreszenten Dunkelzustand überführt werden. Der Emissionsbereich 18 ist dabei typischerweise der Bereich eines lokalen Minimums und insbesondere einer Nullstelle einer Lichtintensitätsverteilung des Fluoreszenzverhinderungslichts 16, die mit einer Lichtintensitätsverteilung des Anregungslichts 14 in der Probe 5 überlagert wird.

Fig. 1 zeigt den Emissionsbereich 18 in einem vergrößerten Ausschnitt 19 der Probe 5 innerhalb eines interessierenden Objekts 20, das sich unter einem Deckglas 21 der Probe 5 befindet. Mit Hilfe eines Scanners 22 des Fluoreszenzlichtmikroskops 1 ist der Emissionsbereich 18 in der Probe 5 positionierbar und das interessierende Objekt 20 mit dem Emissionsbereich 18 abtastbar. Dabei aus der Probe 5 emittiertes und mit dem Objektiv 6 in einer längs seiner optischen Achse 7 verlaufenden Abbildungsrichtung 23 auf den Detektor 9 abgebildetes Fluoreszenzlicht 24 verläuft entgegen einer Beaufschlagungsrichtung 25 des Fluoreszenzanregungslichts 14 und des Fluoreszenzverhinderungslichts 16 durch den Scanner 22 und wird dabei entscannt. Das Fluoreszenzlicht 24 tritt dann durch zwei das Fluoreszenzverhinderungslicht 16 und das Fluoreszenzanregungslicht 14 einkoppelnde dichroitische Spiegel 26 und 27 hindurch, bevor es von einer Linse 28 auf den Detektor 9 fokussiert wird. Dabei ist das optische Element 2 der Linse 28 vorgeschaltet und führt dazu, dass Fluoressenzlicht aus dem Emissionsbereich 18 nicht nur auf einen Kernbereich 29 abgebildet wird, dessen Abmessungen, abgesehen von der Vergrößerung der Abbildung, den Abmessungen des Emissionsbereichs in der jeweiligen Querrichtung zu der Abbildungsrichtung 23 zuzüglich der für das Objektiv 6 und die Wellenlänge des Fluoreszenzlichts 24 geltenden Beugungsgrenze entsprechen. Vielmehr wird das Fluoreszenzlicht 24 aufgrund des optischen Elements 2 in der jeweiligen Querrichtung über noch mehr der Teilbereiche 11 des Detektors 9 verteilt, und diese Verteilung in der Bildebene 8 kodiert die Verteilung der das Fluoreszenzlicht 24 aus dem Emissionsbereich 18 emittierenden Fluoreszenzmarker in der Abbildungsrichtung 23. Entsprechend kann aus dieser Verteilung des Fluoreszenzlichts 24 über die Teilbereiche 11 und den daraus resultierenden Fluoreszenzlichtsignalen der Teilbereiche 11 auf diese Verteilung der Fluoreszenzmarker in dem Emissionsbereich 18 längs der Abbildungsrichtung 23 zurückgeschlossen werden. Dazu kann insbesondere ein quadratischer Fehler gemäß folgender Formel

$$[\sum_z a_z A_z(x', y') - D(x', y')]^2$$

minimiert werden. Hier ist $A_z(x',y')$ die Lichtintensitätsverteilung, die aufgrund der durch das optische Element 2 verformten Punktverteilungsfunktion von einem in der Probentiefe z angeordneten Fluoreszenzmarker auf einen Teilbereich 11 des Detektors 9 mit den Koordinaten $x',y'$ ausgebildet wird. $a_z$ ist die Anzahl der Fluoreszenzmarker in der Probentiefe z und $D(x',y')$ ist die tatsächliche Verteilung der Intensitäten des Fluoreszenzlichts 24 über den Detektor 9. Wenn der obige quadratische Fehler minimiert ist, gibt die Menge $\{a_z\}$ die axiale Verteilung der Fluoreszenzmarker über den Emissionsbereich 18 für die aktuelle Lage des Emissionsbereichs 18 in der Probe 5 an. Durch Abtasten des interessierenden Objekts 20 mit dem Emissionsbereich 18 kann so die Verteilung der Fluoreszenzmarker über das gesamte interessierende Objekt 20 hinweg ermittelt werden. Dabei wird die laterale Lage der jeweiligen Fluoreszenzmarker, d. h. die Lage der Fluoreszenzmarker in den Querrichtungen zu der Abbildungsrichtung 23 der jeweiligen Lage des Emissionsbereichs 18 in der Probe 5 gleichgesetzt.

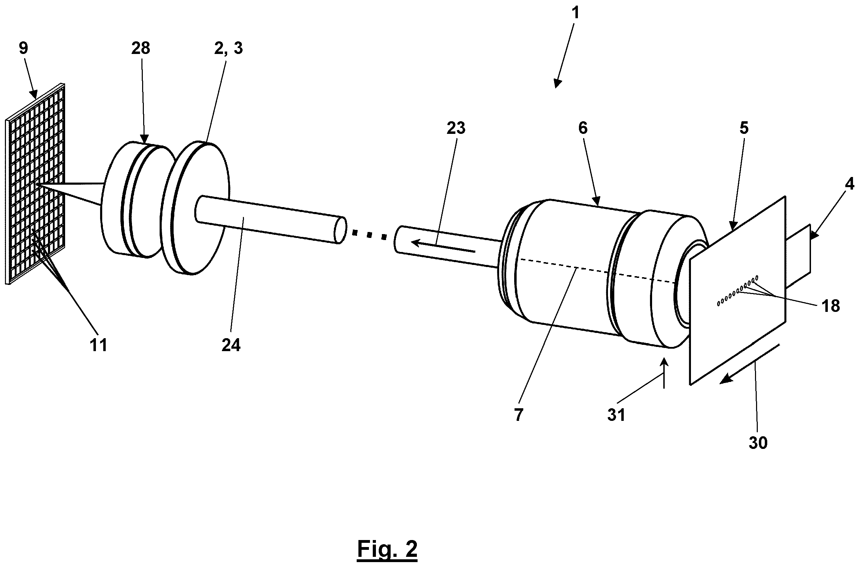

Die perspektivische Ansicht von Teilen 2, 4, 6, 9, 28 des Fluoreszenzlichtmikroskops 1 gemäß **Fig. 2** zeigt verschiedene Relativpositionen des Emissionsbereichs 18 gegenüber der Probe 5. Dabei ist der Emissionsbereich 18 jeweils in einer Querrichtung 30, in der die verschiedenen Relativpositionen in der Probe 5 aufeinanderfolgen und in einer dazu orthogonalen weiteren Querrichtung 31 von deutlich geringeren Abmessungen als längs der Abbildungsrichtung 24, wie ein Vergleich mit Fig. 1 deutlich werden lässt. Konkret ist die axiale Abmessung des Emissionsbereichs 18 mehr als 4-mal größer als jede laterale Abmessung in den Querrichtungen 30 und 31. Die axiale Abmessung kann auch mindestens 10-mal größer sein. Durch die geringen lateralen Abmessungen kann einerseits das mit dem Detektor 9 für eine Relativposition des Emissionsbereichs 18 in der Probe 5 registrierte Fluoreszenzlicht 24 bestimmten x- und y-Koordinaten in den Querrichtungen 30 und 31 in der Probe 5 zugeordnet werden, weil es nur aus dem Emissionsbereich 18 mit diesen x- und y-Koordinaten stammen kann. Zum anderen ist der Detektor 9 in den auf ihn abgebildeten Querrichtungen 30 und 31 frei von der Aufgabe, mit seinen Teilbereichen 11 eine Verteilung des Fluoreszenzlichts 24 über den Detektor 9 zu erfassen, aus der die x- und y-Koordinaten der das Fluoreszenzlicht 24 emittierenden Fluoreszenzmarker bestimmt werden kann, weil diese Fluoreszenzmarker die aktuellen x- und y-Koordinaten des Emissionsbereichs 18 haben. Stattdessen kodiert das optische Element 2 in Form des Phasenfilters 3 in den auf den Detektor 9 abgebildeten Querrichtungen 30 und 31 die Lage der emittierenden Fluoreszenzmarker längs der Abbildungsrichtung 24, d. h. die z-Position der Fluoreszenzmarker.

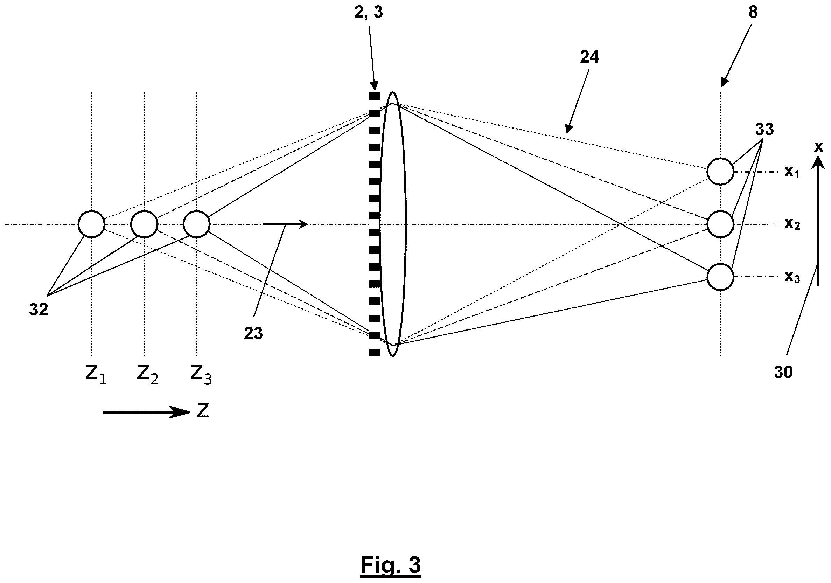

**Fig. 3** erläutert dieses Konzept anhand von drei Fluoreszenzmarkern 32, die sich hintereinander in der Abbildungsrichtung 23 auf drei verschiedenen z-Positionen $z_1$, $z_2$ und $z_3$ befinden. Diese Fluoreszenzmarker 32 werden in der Bildebene 8 in Abbilder 33 in drei verschiedenen x-Positionen abgebildet. Entsprechend ergibt jede Verteilung der Fluoreszenzmarker 32 längs der Abbildungsrichtung 23, d. h. der z-Richtung eine entsprechende Verteilung des Fluoreszenzlichts 24 von den Fluoreszenzmarkern 32 in der Bildebene 8 längs der auf den Detektor 9 abgebildeten Querrichtung 30, d. h. hier der x-Richtung, wo sie mit den in dieser Richtung verteilten Teilbereichen 11 des Detektors 9 erfasst wird. Aus dieser erfassten Intensitätsverteilung des Fluoreszenzlichts 24 über die Bildebene 8 kann daher auf die Verteilung der Fluoreszenzmarker 32 längs der Abbildungsrichtung 23 rückgeschlossen werden.

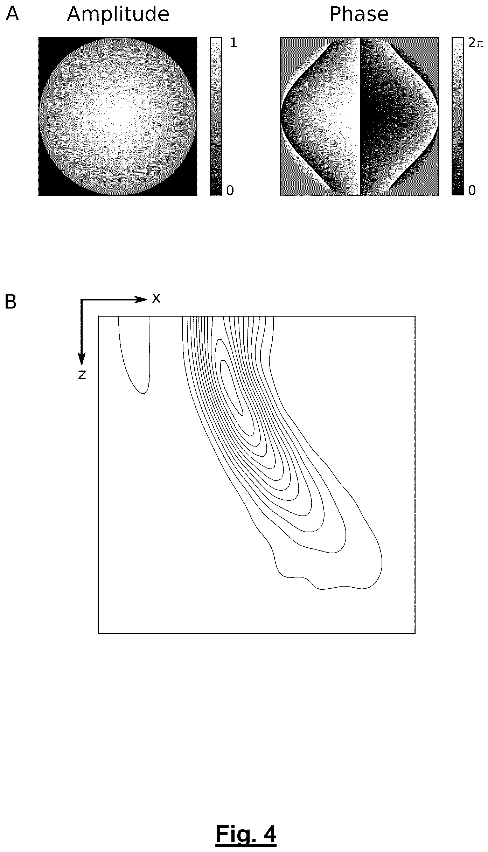

**Fig. 4A** erläutert eine mögliche Ausbildung eines Phasenfilters 3 hinsichtlich seines Einflusses auf die Amplitude und die Phase des durch ihn hindurchtretenden Fluoreszenzlichts 24. Fig. 4B zeigt die aus dem Phasenfilter gemäß Fig. 4A resultierende Punktverteilungsfunktion in einem axialen Schnitt längs einer x-z-Ebene. Diese Punktverteilungsfunktion bedeutet, dass sich die Abbilder 33 der Fluoreszenzmarker 32 auf einem längs der x-Richtung ausgerichteten lichtempfindlichen Detektionsbereich 10 des Detektors 9 mit in z-Richtung zunehmender Tiefe der Fluoreszenzmarker 32 in der Probe 5 in der x-Richtung verlagern. Die in Fig. 4B dargestellte Punktverteilungsfunktion ist auch als *self bending PSF* bekannt.

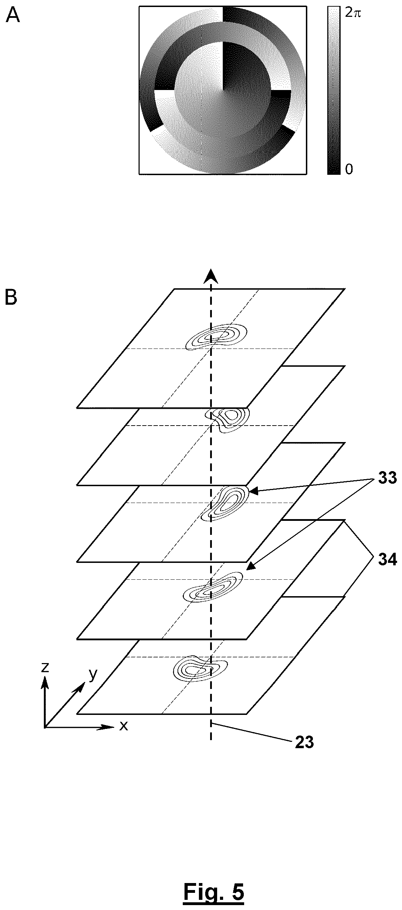

**Fig. 5A** zeigt die Modulation der Phase durch ein anderes Phasenfilter 3, das bei dem erfindungsgemäßen Fluoreszenzlichtmikroskop zur Anwendung kommen kann. Dabei erfüllt das Phasenfilter 3 die Definition

$$\varphi\left(r, \phi_r\right) = \left\{(m\,i - 1)\phi_r \sqrt{\frac{i-1}{N}} \leq r \leq \sqrt{\frac{i}{N}}, i = 1, \ldots, N\right\}$$

**Fig. 5B** zeigt die resultierende Punktverteilungsfunktion in verschiedenen x-y-Schnitten mit unterschiedlichen z-Lagen. Die über der jeweiligen Schnittebene resultierende Intensitätsverteilung rotiert mit der z-Lage um die Abbildungsrichtung 23. Streng genommen handelt es sich dabei um die lokale Abbildungsrichtung in der der jeweilige Punkt der Probe 5 abgebildet wird. Diese Abbildungsrichtung ist aber für alle Punkte des Emissionsbereichs 18 aufgrund dessen kleinen lateralen Abmessungen zumindest dann im Wesentlichen gleich, wenn die Haupterstreckungsrichtung des Emissionsbereichs 18 längs der Abbildungsrichtung 23 verläuft. Entsprechend kann aus der x-y-Lage des Abbilds 33 auf die z-Lage des emittierenden Fluoreszenzmarkers bzw. aus der Intensitätsverteilung des Fluoreszenzlichts 24 über den lichtempfindlichen Bereich 10 des Detektors 9 auf die Verteilung der Fluoreszenzmarker in dem Emissionsbereich 18 längs der Abbildungsrichtung 23 rückgeschlossen werden.

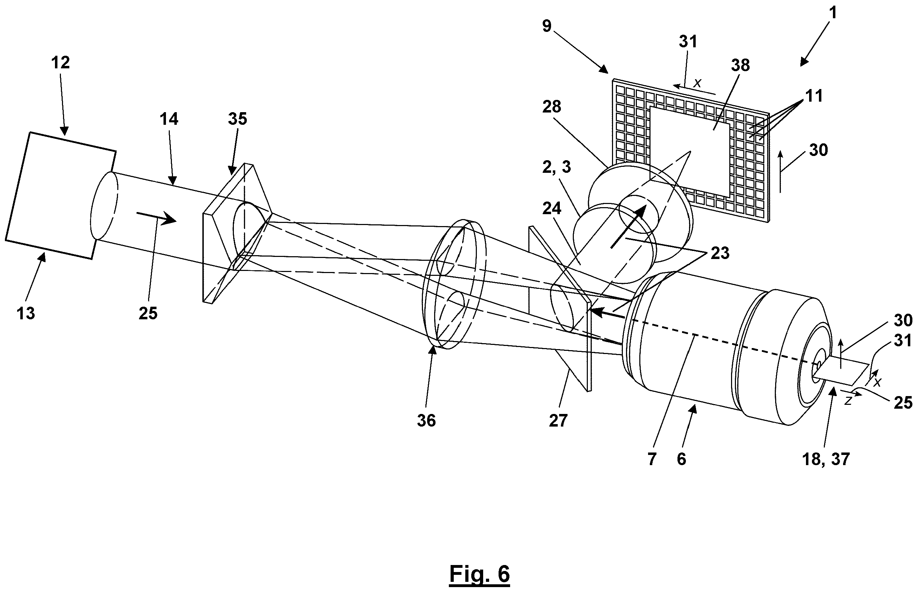

**Fig. 6** zeigt ein erfindungsgemäßes Fluoreszenzlichtmikroskop 1 ohne Wiedergabe des Probenhalters 4 oder des Scanners 22, die aber auch Teil dieses Fluoreszenzlichtmikroskops 1 sind. Die Probe 5 ist ebenfalls anders als in den Fig. 1 und 2 nicht dargestellt. Die Lichtquelle 12 umfasst hier nur die Teillichtquelle 13 für das Fluoreszenzanregungslicht 14. Mit Hilfe eines Prismas 35 und einer Linse 36 wird das Anregungslicht 14 in grundsätzlich bekannter Weise so geformt, dass es von dem Objektiv 6 in ein Lichtblatt 37 fokussiert wird. Das Lichtblatt 37 erstreckt sich längs der optischen Achse 7 in der Beaufschlagungsrichtung 25, die hier auch als z-Richtung bezeichnet wird. In der Querrichtung 30 zu der Beaufschlagungsrichtung 25 ist die laterale Abmessung des Lichtblatts 37 viel kleiner als in der Beaufschlagungsrichtung 25 und in der weiteren Querrichtung 31, die hier die x-Richtung ist. Das Lichtblatt 37 ist bei dieser Ausführungsform des Fluoreszenzlichtmikroskops der Emissionsbereich 18. Die Abbildungsrichtung 23 bei der Abbildung des Fluoreszenzlichts 24, das aus dem Lichtblatt 37 als Emissionsbereich 18 emittiert wird, auf den Detektor 9 knickt hier an dem dichroitischen Spiegel 27 zu dem Detektor 9 hin ab. Die Intensitätsverteilung 38 des Fluoreszenzlichts über den Detektor 9 ist in der auf den Detektor 9 abgebildeten weiteren Querrichtung 31, d. h. der x-Richtung ausgedehnt, weil in dieser Richtung das Lichtblatt 37 ausgedehnt ist. In der auf den Detektor 9 abgebildeten Querrichtung 30 beruht die Ausdehnung der Intensitätsverteilung 38 des Fluoreszenzlichts 24 hingegen auf dem Phasenfilter 3, das die Punktverteilungsfunktion der Abbildung in dieser Richtung so ausweitet und/oder deformiert, dass in der auf den Detektor 9 abgebildeten Querrichtung 30 die z-Position der das Fluoreszenzlicht 24 emittierenden Fluoreszenzmarker kodiert ist. So entspricht die Identitätsverteilung 38 über den Detektor 9 unter Berücksichtigung der durch das Phasenfilter 3 bewirkten Punktverteilungsfunktion der Verteilung der das Fluoreszenzlicht 24 emittierenden Fluoreszenzmarker über das Lichtblatt 37. Durch Abtasten der jeweiligen Probe mit dem Lichtblatt 37 in der Querrichtung 30 kann die Verteilung der Fluoreszenzmarker in allen drei Dimensionen über die interessierenden Objekte der Probe hinweg ermittelt werden. Ein entsprechender Scanner kann aber auch ausschließlich dazu verwendet werden, das Lichtblatt 37 so in der Probe zu positionieren, dass es einen interessierenden Bereich der Probe erfasst, um dann die Verteilung der Fluoreszenzmarker über das Lichtblatt zu ermitteln. Diese Verteilung entspricht einem Schnitt durch die Probe längs des Lichtblatts 37. Ein hierfür geeigneter Scanner wird schon durch eine mit dem Probenhalter verbundene Probenpositioniervorrichtung bereitgestellt, mit der der Probenhalter gegenüber dem Objektiv 6 und damit gegenüber dem Lichtblatt 37 in verschiedene Relativpositionen bringbar ist.

**BEZUGSZEICHENLISTE**

1       Fluoreszenzlichtmikroskop
2       optisches Element
3       Phasenfilter
4       Probenhalter
5       Probe
6       Objektiv
7       optische Achse
8       Bildebene
9       Detektor
10      lichtempfindlicher Detektionsbereich
11      Teilbereich
12      Lichtquelle
13      Teillichtquelle
14      Fluoreszenzanregungslicht
15      Teillichtquelle
16      Fluoreszenzverhinderungslicht
17      Phasenplatte
18      Emissionsbereich
19      Ausschnitt der Probe 5
20      interessierendes Objekt
21      Deckglas
22      Scanner
23      Abbildungsrichtung
24      Fluoreszenzlicht
25      Beaufschlagungsrichtung
26      dichroitischer Spiegel
27      dichroitischer Spiegel
28      Linse
29      Kernbereich
30      Querrichtung
31      weitere Querrichtung
32      Fluoreszenzmarker
33      Abbild
35      Prisma
36      Linse
37      Lichtblatt
38      Intensitätsverteilung

**Patentansprüche**

**1.** Verfahren zum Ermitteln einer Verteilung von Fluoreszenzmarkern (32) in einer Probe (5), bei der die einzelnen Fluoreszenzmarker (32) dichter als die Beugungsgrenze beieinander liegen, mit:

- Abbilden der Probe (5) in einer Abbildungsrichtung (23) auf einen Detektor (9), wobei ein quer zu der Abbildungsrichtung (23) verlaufender lichtempfindlicher Detektionsbereich (10) des Detektors (9) in Teilbereiche (11) unterteilt ist,
- Beaufschlagen der Probe (5) aus einer zu der Abbildungsrichtung (23) gegenläufigen Beaufschlagungsrichtung (25) mit einer Lichtintensitätsverteilung, die einen räumlich begrenzten Emissionsbereich (18) umfasst, in welchem die Fluoreszenzmarker (32) zur Emission von Fluoreszenzlicht veranlasst werden, wobei eine axiale Ausdehnung des Emissionsbereichs (18) längs der Abbildungsrichtung (23) mindestens 4-mal größer ist als eine laterale Ausdehnung des Emissionsbereichs (18) in mindestens einer quer zu der Abbildungsrichtung (23) verlaufenden Querrichtung (30),
- Ausbilden der Lichtintensitätsverteilung in der Probe (5) aus Fluoreszenzanregungslicht (14) und Fluoreszenzverhinderungslicht (16), wobei eine Teillichtintensitätsverteilung des Fluoreszenzverhinderungslichts (16) den Emissionsbereich (18) in der mindestens einen Querrichtung (30) gegenüber einem Anregungsbereich einer Teillichtintensitätsverteilung des Fluoreszenzanregungslichts (14) bis auf nicht mehr als 50 % eines beugungsbegrenzten Anregungsbereichs einer Teillichtintensitätsverteilung des Fluoreszenzanregungslichts (14) einengt,

- Auslesen von Fluoreszenzlichtsignalen aus den Teilbereichen (11) des Detektors (9) für mindestens eine Relativlage des Emissionsbereichs (18) gegenüber der Probe (5) und
- Auswerten der Fluoreszenzlichtsignale hinsichtlich der Verteilung der Fluoreszenzmarker (32) in der Probe (5),

**dadurch gekennzeichnet,**

- **dass** mit einem zwischen der Probe (5) und dem Detektor (9) angeordneten nichtdiffraktiven optischen Element (2) eine Punktverteilungsfunktion beim Abbilden der Probe (5) in der Abbildungsrichtung (23) auf den Detektor (9) abhängig vom Ort in der Probe (5) längs der Abbildungsrichtung (23) zumindest in der mindestens einen auf den Detektor (9) abgebildeten Querrichtung (30) verformt und/oder verlagert wird,
- wobei für die mindestens eine Relativlage des Emissionsbereichs (18) gegenüber der Probe (5) die Verteilung der Fluoreszenzmarker (32) längs der Abbildungsrichtung (23) unter Auswerten der Fluoreszenzlichtsignale bestimmt wird, die aus denjenigen der Teilbereiche (11) des Detektors (9) ausgelesen werden, welche in der auf den Detektor (9) abgebildeten mindestens einen Querrichtung (30) außerhalb eines Zentralbereichs (29) liegen, in den alle Punkte des Emissionsbereichs (18) jeweils mit einer nicht durch das nichtdiffraktive optische Element (2) verformten und/oder verlagerten minimalen beugungsbegrenzten Punktverteilungsfunktion in der Abbildungsrichtung (23) auf den Detektor (9) abgebildet würden.

2. Verfahren nach Anspruch 1, **dadurch gekennzeichnet, dass** die Teillichtintensitätsverteilung des Fluoreszenzverhinderungslichts (16) den Emissionsbereich (18) in der mindestens einen Querrichtung (30) bis auf nicht mehr als 25 % oder 10 % des beugungsbegrenzten Anregungsbereichs der Teillichtintensitätsverteilung des Fluoreszenzanregungslichts (14) einengt und wobei die Verteilung der Fluoreszenzmarker (32) längs der Abbildungsrichtung (23) für die mindestens eine Relativlage des Emissionsbereichs (18) gegenüber der Probe (5) optional mit einer Genauigkeit besser als bei konfokaler Fluoreszenzlichtmikroskopie bestimmt wird.

3. Verfahren nach einem der vorhergehenden Ansprüche, **dadurch gekennzeichnet, dass** beim Bestimmen der Verteilung der Fluoreszenzmarker (32) längs der Abbildungsrichtung (23) für die mindestens eine Relativlage des Emissionsbereichs (18) gegenüber der Probe (5) eine Modellfunktion an die Fluoreszenzlichtsignale angefittet wird, die aus den Teilbereichen (11) des Detektors (9) ausgelesen werden, wobei die Modellfunktion optional als Argument die interessierende Verteilung aufweist und die daraus aufgrund der beim Abbilden der Probe (5) auf den Detektor (9) wirksamen Punktverteilungsfunktion resultierende Verteilung der Fluoreszenzlichtsignale der Teilbereiche (11) des Detektors (9) anzeigt.

4. Verfahren nach einem der vorhergehenden Ansprüche, **dadurch gekennzeichnet, dass** die Probe (5) mit dem Emissionsbereich (18) in der mindestens einen Querrichtung (30) abgetastet wird und dass die Verteilung der Fluoreszenzmarker (32) längs der mindestens einen Querrichtung (30) unter Auswerten der Fluoreszenzlichtsignale bestimmt wird, die aus den Teilbereichen (11) des Detektors (9) für verschiedene Relativlagen des Emissionsbereichs (18) gegenüber der Probe (5) in der mindestens einen Querrichtung (30) ausgelesen werden.

5. Verfahren nach einem der vorhergehenden Ansprüche, **dadurch gekennzeichnet, dass** für die mindestens eine Relativlage des Emissionsbereichs (18) gegenüber der Probe (5) die Verteilung der Fluoreszenzmarker (32) in einer quer zu der Abbildungsrichtung (23) und quer zu der mindestens einen Querrichtung (30) verlaufenden weiteren Querrichtung (31) unter Auswerten der Fluoreszenzlichtsignale bestimmt wird, die aus Teilbereichen (11) des Detektors (9) ausgelesen werden, welche in der auf den Detektor (9) abgebildeten weiteren Querrichtung (31) verteilt sind.

6. Verfahren nach einem der Ansprüche 1 bis 4, **dadurch gekennzeichnet, dass** die axiale Ausdehnung des Emissionsbereichs (18) längs der Abbildungsrichtung (23) um den Faktor von mindestens 4 auch größer ist als eine weitere laterale Ausdehnung des Emissionsbereichs (18) in einer quer zu der Abbildungsrichtung (23) und der mindestens einen Querrichtung (30) verlaufenden weiteren Querrichtung (31), wobei für die mindestens eine Relativlage des Emissionsbereichs (18) gegenüber der Probe (5) die Verteilung der Fluoreszenzmarker (32) längs der Abbildungsrichtung (23) optional unter Auswerten der Fluoreszenzlichtsignale bestimmt wird, die aus denjenigen der Teilbereiche (11) des Detektors (9) ausgelesen werden, welche in der auf den Detektor (9) abgebildeten mindestens einen Querrichtung (30) und der auf den Detektor (9) abgebildeten weiteren Querrichtung (31) außerhalb des Zentralbereichs (29) liegen.

7. Verfahren nach Anspruch 6, **dadurch gekennzeichnet, dass** die Probe (5) mit dem Emissionsbereich (18) in der mindestens einen Querrichtung (30) und der weiteren Querrichtung (31) abgetastet wird und dass die Verteilung der Fluoreszenzmarker (32) längs der mindestens einen Querrichtung (30) und der weiteren Querrichtung (31) unter Auswerten der Fluoreszenzlichtsignale bestimmt wird, die aus den Teilbereichen (11) des Detektors (9) für verschiedene Relativlagen des Emissionsbereichs (18) gegenüber der Probe (5) in der mindestens einen Querrichtung (30) und der weiteren Querrichtung (31) ausgelesen werden, wobei optional für das Bestimmen der Verteilung der Fluoreszenzmarker (32) längs der mindestens einen Querrichtung (30) und der weiteren Querrichtung (31) die aus den Teilbereichen (11) des Detektors (9), die in der jeweiligen auf den Detektor (9) abgebildeten Querrichtung (30, 31) verteilt sind, ausgelesenen Fluoreszenzlichtsignale für die jeweilige Relativlage des Emissionsbereichs (18) gegenüber der Probe (5) aufsummiert werden.

8. Verfahren nach einem der vorhergehenden Ansprüche, **dadurch gekennzeichnet, dass** der Emissionsbereich (18)

   - durch Formen des Lichts zu einem Besselstrahl und/oder
   - durch Formen des Lichts mit einem Axicon oder einem Prisma (35) und/oder
   - durch überlagertes schnelles Scannen der Probe (5) mit der Lichtintensitätsverteilung längs der Abbildungsrichtung (23)

   längs der Abbildungsrichtung (23) ausgeweitet wird.

9. Fluoreszenzlichtmikroskop (1) zur Durchführung des Verfahrens nach einem der vorhergehenden Ansprüche, mit

   - einem Probenhalter (4),
   - einem Objektiv (6) mit einer optischen Achse (7),
   - einem Detektor (9), der in einer Bildebene (8) des Objektivs (6) angeordnet ist und dessen lichtempfindlicher Detektionsbereich (10) in der Bildebene (8) in mehrere Teilbereiche (11) unterteilt ist, die Fluoreszenzlichtsignale bereitstellen,
   - einer Lichtquelle (12), die dazu ausgebildet ist, eine von dem Probenhalter (4) gehaltene Probe (5) durch das Objektiv (6) mit Licht zu beaufschlagen, wobei eine Lichtintensitätsverteilung in der Probe (5) ausgebildet wird, die einen räumlich begrenzten Emissionsbereich (18) umfasst, in welchem die Fluoreszenzmarker (32) zur Emission von Fluoreszenzlicht (24) veranlasst werden, wobei eine axiale Ausdehnung des Emissionsbereichs (18) längs der optischen Achse (7) mindestens 4-mal größer ist als eine laterale Ausdehnung des Emissionsbereichs (18) in mindestens einer quer zu der optischen Achse (7) verlaufenden Querrichtung (30), wobei die Lichtquelle (12) dazu ausgebildet ist, die Lichtintensitätsverteilung in der Probe (5) aus Fluoreszenzanregungslicht (14) und Fluoreszenzverhinderungslicht (16) auszubilden, wobei eine Teillichtintensitätsverteilung des Fluoreszenzverhinderungslichts (16) den Emissionsbereich (18) in der mindestens einen Querrichtung (30) bis auf nicht mehr als 50 % eines beugungsbegrenzten Anregungsbereichs einer Teillichtintensitätsverteilung des Fluoreszenzanregungslichts (14) einengt,
   - einem Scanner (22), der dazu ausgebildet ist, den Emissionsbereich (18) gegenüber der Probe (5) zu verlagern,
   - Registriereinrichtungen, die dazu ausgebildet sind, die Fluoreszenzlichtsignale für eine jeweilige Relativlage des Emissionsbereichs (18) gegenüber der Probe (5) zu registrieren, und
   - Auswerteeinrichtungen, die dazu ausgebildet sind, die Fluoreszenzlichtsignale hinsichtlich der Verteilung der Fluoreszenzmarker (32) in der Probe (5) auszuwerten,

   **dadurch gekennzeichnet,**

   - **dass** zwischen dem Objektiv (6) und dem Detektor (9) ein nichtdiffraktives optisches Element (2) angeordnet ist, das dazu ausgebildet ist, eine Punktverteilungsfunktion beim Abbilden der Probe (5) mit dem Objektiv (6) in der Abbildungsrichtung (23) auf den Detektor (9) abhängig vom Ort längs der optischen Achse (7) in der mindestens einen Querrichtung (30) zu verformen und/oder zu verlagern, und
   - **dass** die Auswerteeinrichtungen dazu ausgebildet sind, die Verteilung der Fluoreszenzmarker (32) in der Probe (5) längs der optischen Achse (7) für die jeweilige Relativlage des Emissionsbereichs (18) gegenüber der Probe (5) unter Auswerten der Fluoreszenzlichtsignale zu bestimmen, die von denjenigen der Teilbereiche (11) des Detektors (9) bereitgestellt wurden, welche in der auf den Detektor (9) abgebildeten mindestens einen Querrichtung (30) außerhalb eines Zentralbereichs (29) liegen, in den alle Punkte des Emissionsbereichs (18) jeweils mit einer nicht durch das nichtdiffraktive optische Element (2) verformten und/oder verlagerten minimalen beugungsbegrenzten Punktverteilungsfunktion in der Abbildungsrichtung (23) auf den Detektor (9) abgebildet würden.

**10.** Fluoreszenzlichtmikroskop (1) nach Anspruch 9, **dadurch gekennzeichnet, dass** das nichtdiffraktive optische Element (2) aus optischen Elementen ausgewählt ist,

- die die Punktverteilungsfunktion (PSF) gegenüber einer axialen Symmetrie in der mindestens einen Querrichtung (30) verkippen,
- die eine *self-bending PSF* erzeugen,
- die eine rotierende PSF erzeugen,
- die eine *double helix PSF* erzeugen,
- die eine *conical diffraction* bewirken,
- die ein Axicon oder ein Prisma aufweisen,
- die einen Astigmatismus erzeugen.

**11.** Fluoreszenzlichtmikroskop (1) nach einem der Ansprüche 9 und 10, **dadurch gekennzeichnet, dass** die Lichtquelle (12) dazu ausgebildet ist, dass die Teillichtintensitätsverteilung des Fluoreszenzverhinderungslichts (16) den Emissionsbereich (18) in der mindestens einen Querrichtung (30) bis auf nicht mehr als 25 % oder 10 % des beugungsbegrenzten Anregungsbereichs der Teillichtintensitätsverteilung des Fluoreszenzanregungslichts (14) einengt und wobei die Auswerteeinrichtungen optional dazu ausgebildet sind, die Verteilung der Fluoreszenzmarker (32) längs der Abbildungsrichtung (23) für die jeweilige Relativlage des Emissionsbereichs (18) gegenüber der Probe (5) mit einer Genauigkeit besser als bei konfokaler Fluoreszenzlichtmikroskopie zu bestimmen.

**12.** Fluoreszenzlichtmikroskop (1) nach einem der Ansprüche 9 bis 11, **dadurch gekennzeichnet, dass** die Auswerteeinrichtungen dazu ausgebildet sind, beim Bestimmen der Verteilung der Fluoreszenzmarker (32) längs der Abbildungsrichtung (23) für die jeweilige Relativlage des Emissionsbereichs (18) gegenüber der Probe (5) eine Modellfunktion an die Fluoreszenzlichtsignale anzufitten, die von den Teilbereichen (11) des Detektors (9) bereitgestellt wurden.

**13.** Fluoreszenzlichtmikroskop (1) nach einem der Ansprüche 9 bis 12, **dadurch gekennzeichnet, dass** der lichtempfindliche Detektionsbereich (10) in der auf den Detektor (9) abgebildeten mindestens einen Querrichtung (30) mindestens 2 mal so groß ist wie der Zentralbereich (29).

**14.** Fluoreszenzlichtmikroskop (1) nach einem der Ansprüche 9 bis 13, **dadurch gekennzeichnet,**

- **dass** die Lichtquelle (12) dazu ausgebildet ist, die Lichtintensitätsverteilung in der Probe (5) so auszubilden, dass die axiale Ausdehnung des Emissionsbereichs (18) längs der optischen Achse (7) des Objektivs (6) um mindestens einen Faktor 4 größer ist als jede laterale Ausdehnung des Anregungsbereichs in jeder quer zu der optischen Achse (7) verlaufenden Querrichtung (30, 31), und
- **dass** der lichtempfindliche Detektionsbereich (10) in beiden Dimensionen der Bildebene (8) des Objektivs (6) in mehrere lichtempfindliche Teilbereiche (11) unterteilt ist.

**15.** Fluoreszenzlichtmikroskop (1) nach einem der Ansprüche 9 bis 14, **dadurch gekennzeichnet, dass** die Lichtquelle (12) dazu ausgebildet ist, den Anregungsbereich

- durch Formen des Lichts zu einem Besselstrahl und/oder
- durch Formen des Lichts mit einem Axicon oder einem Prisma (35) und/oder
- durch überlagertes schnelles Scannen der Probe (5) mit der Lichtintensitätsverteilung längs der optischen Achse (7)

längs der optischen Achse (7) auszuweiten.

**Claims**

**1.** Method of determining a distribution of fluorescence markers (32) in a sample (5) in which the individual fluorescence markers (32) are located closer to one another than the diffraction barrier, the method comprising:

- imaging the sample (5) in an imaging direction (23) onto a detector (9), wherein a light sensitive detection area (10) of the detector (9) extending transversely to the imaging direction (23) is subdivided into partial areas (11),
- subjecting the sample (5), out of a subjection direction (25) opposite to the imaging direction (23), to a light intensity distribution that includes a spatially limited emission area (13) in which the fluorescence markers (32) are induced to emission of fluorescence light, wherein an axial dimension of the emission area (18) along the imaging direction (23) is at least 4-times larger than a lateral extension of the emission area (18) in at least one transvers direction (30) running transversely to the imaging direction (23),

- forming the light intensity distribution in the sample (5) from fluorescence excitation light (14) and fluorescence inhibition light (16), wherein a partial light intensity distribution of the fluorescence inhibition light (16) narrows the emission area (18) in the at least one transvers direction (30) with regard to an excitation area of a partial light intensity distribution of the fluorescence excitation light (14) to not more than 50 % of a diffraction limited excitation area of a partial light intensity distribution of the fluorescence excitation light (14),

- reading out fluorescence light signals out of the partial areas (11) of the detector (9) for at least one relative position of the emission are (18) with regard to the sample (5), and

- evaluating the fluorescence light signal with regard to the distribution of the fluorescence markers (32) in the sample (5),

**characterized in**

- **that** a point spread function in imaging the sample (5) in the imaging direction (23) onto the detector (9) is deformed and/or shifted at least in the at least one transvers direction (30) imaged onto the detector (9) depending on a location in the sample (5) along the imaging direction (23) by means of a non-diffractive optical element (2) arranged between the sample (5) and the detector (9),

- wherein, for the at least one relative position of the emission area (18) with regard to the sample (5), the distribution of the fluorescence markers (32) along the imaging direction (23) is determined under evaluating the fluorescence light signals which are read out of those of the partial areas (11) of the detector (9) that are, in the transvers direction (30) imaged onto the detector (9), located outside a central area (29) into which all points of the emission area (18) would be imaged in the imaging direction (23) onto the detector (9) each with a minimum diffraction-limited point spread function that is not deformed and/or shifted by means of the non-diffractive optical element (2).

2. Method of claim 1, **characterized in that** the partial light intensity distribution of the fluorescence inhibition light (16) narrows the emission area (18) in the at least one transvers direction (30) to not more than 25 % or 10% of the diffraction-limited excitation area of the partial light intensity distribution of the fluorescence excitation light (14), and wherein, optionally, the distribution of the fluorescence markers (32) along the imaging direction (23) is determined for the at least one relative position of the emission area (18) with regard to the sample (5) at a precision better than in confocal fluorescence light microscopy.

3. Method of any of the preceding claims, **characterized in that**, in determining the distribution of the fluorescence markers (32) along the imaging direction (23) for the at least one relative position of the emission area (18) with regard to the sample (5), a model function is fitted to the fluorescence light signals which are read out of the partial areas (11) of the detector (9), wherein, optionally, the model function comprises the distribution of interest as an argument and indicates the distribution of the fluorescence light signals of the partial areas (11) of the detector (9) resulting therefrom due to the point spread function effective in imaging the sample (5) onto the detector (9).

4. Method of any of the preceding claims, **characterized in that** the sample (5) is scanned with the emission area (18) in the at least one transvers direction (30), and that the distribution of the fluorescence markers (32) along the at least one transvers direction (30) is determined under evaluating the fluorescence light signals which are read out of the partial areas (11) of the detector (9) for different relative positions of the emission area (18) with regard to the sample (5) in the at least one transvers direction (30).

5. Method of any of the preceding claims, **characterized in that**, for the at least one relative position of the emission area (18) with regard to the sample (5), the distribution of the fluorescence markers (32) in at least one further transvers direction (31) which runs transversely to the imaging direction (23) and transversely to the at least one transvers direction (30) is determined under evaluating the fluorescence light signals which are read out of partial areas (11) of the detector (9) that are distributed in the further transvers direction (31) imaged onto the detector (9).

6. Method of any of the claims 1 to 4, **characterized in that** the axial extension of the emission area (18) along the imaging direction (23) is by the factor of at least 4 also larger than a further lateral extension of the emission area (18) in a further transvers direction (31) which runs transversely to the imaging direction (23) and the at least one transvers direction (30), wherein, optionally, for the at least one relative position of the emission area (18) with regard to the sample (5), the distribution of the fluorescence markers (32) along the imaging direction (23) is determined under evaluating the fluorescence light signals which are read out of those of the partial areas (11) of the detector (9) that are located outside the central area in the at least one transvers direction (30) imaged onto the detector (9) and the further transvers direction (31) imaged onto the detector (9).

7. Method of claim 6, **characterized in that** the sample (5) is scanned in the at least one transvers direction (30) and the further transvers direction (31) with the emission area (18), and that the distribution of the fluorescence markers (32) along the at least one transvers direction (30) and the further transvers direction (31) is determined under evaluating the fluorescence light signals which are read out of the partial areas (11) of the detector (9) for different relative positions of the emission area (18) with regard to the sample (5) in the at least one transvers direction (30) and the further transvers direction (31), wherein, optionally, for determining the distribution of the fluorescence markers (32) along the at least one transvers direction (30) and the further transvers direction (31), the fluorescence light signals which are read out of the partial areas (11) of the detector (9) that are distributed in the respective transvers direction (30, 31) imaged onto the detector (9) are summed up for the respective relative position of the emission area (18) with regard to the sample (5).

8. Method of any of the preceding claims, **characterized in that** the emission area (18) is expanded along the imaging direction (23)

  - by shaping the light into a Bessel-beam and/or
  - by shaping the light by means of an axicon or a prism (35) and/or
  - by superimposed quickly scanning the sample (5) with the light intensity distribution along the imaging direction (23).

9. Fluorescence light microscope (1) for carrying out the method of any of the preceding claims, comprising

  - a sample holder (4),
  - an objective lens (6) having an optical axis (7),
  - a detector (9) which is arranged in an image plane (8) of the objective lens (6) and whose light sensitivity detection area (10) is subdivided in the image plane (8) into a plurality of partial areas (11) which provide fluorescence light signals,
  - a light source (12) which is configured for subjecting a sample (5) held by the sample holder (4) through the objective lens (6) to light, wherein a light intensity distribution in the sample (5) is formed, that includes a spatially limited emission area (18), in which the fluorescence makers (32) are induced for emission of fluorescence light (24), wherein an axial extension of the emission area (18) along the optical axis (7) is at least 4-times larger than a lateral extension of the emission area (18) in at least one transvers direction (30) running transversely to the optical axis (7), wherein the light source (12) is configured for forming the light intensity distribution in the sample (5) from fluorescence excitation light (14) and fluorescence inhibition light (16), wherein a partial light intensity distribution of the fluorescence inhibition light (16) narrows the emission area (18) in the at least one transvers direction (30) to not more than 50% of a diffraction-limited excitation area of a partial light intensity distribution of the fluorescence excitation light (14),
  - a scanner (22) which is configured for shifting the emission area (18) with regard to the sample (5),
  - registering devices which are configured for registering the fluorescence light signals for a respective relative position of the emission area (18) with regard to the sample (5), and
  - evaluation devices which are configured for evaluating the fluorescence light signals with regard to the distribution of the fluorescence markers (32) in the sample (5),

**characterized in**

  - **that** a non-diffractive optical element (2) arranged between the objective lens (6) and the detector (9) is configured for deforming and/or shifting a point spread function in imaging the sample (5) by means of the objective lens (6) in the imaging direction (23) onto the detector (9) in the at least one transvers direction (30) depending on the location along the optical axis (7), and
  - **that** the evaluation devices are configured for determining the distribution of the fluorescence markers (32) in the sample (5) along the optical axis (7) for the respective relative position of the emission area (18) with regard to the sample (5) under evaluating the fluorescence light signals which are provided by those of the partial areas (11) of the detector (9) that are located in the at least one transvers direction (30) imaged onto the detector (9) outside a central area (29) into which all points of the emission area (18) would be imaged in the imaging direction (23) onto the detector (9) with a minimum diffraction-limited point spread function not deformed by the non-diffractive optical element (2).

10. Fluorescence light microscope (1) of claim 9, **characterized in that** the non-diffractive optical element (2) is selected from optical elements

   - which, with respect to an axial symmetry, tilt the point spread function (PSF) in the at least one transvers direction (30),
   - which generate a self-bending PSF,
   - which generate a rotating PSF,
   - which generate a double-helix PSF,
   - which result in a conical diffraction,
   - which comprise an axicon or a prism,
   - which generate an astigmatism.

11. Fluorescence light microscope (1) of any of the claims 9 and 10, **characterized in that** the light source (12) is configured such that the light intensity distribution of the fluorescence inhibition light (16) narrows the emission area (18) in the at least one transvers direction (30) to not more than 25 % or 10 % of the diffraction-limited excitation area of the partial light intensity distribution of the fluorescence excitation light (14), and wherein, optionally, the evaluation device is configured for determining the distribution of the fluorescence markers (32) along the imaging direction (23) for the respective relative position of the emission area (18) with regard to the sample (5) at a precision better than in confocal fluorescence light microscopy.

12. Fluorescence light microscope (1) of any of the claims 9 to 11, **characterized in that** the evaluation devices are configured for, in determining the distribution of the fluorescence markers (32) along the imaging direction (23) for the respective relative position of the emission area (18) with regard to the sample (5), fitting a model function to the fluorescence light signals which are provided by the partial areas (11) of the detector (9).

13. Fluorescence light microscope (1) of any of the claims 9 to 12, **characterized in that**, in the at least one transvers direction (30) imaged onto the detector (9), the light sensitive detection area (10) is at least 2-tines larger than the central area (29).

14. Fluorescence light microscope (1) of any of the claims 9 to 13, **characterized in**

   - **that** the light source (12) is configured for forming the light intensity distribution in the sample (5) such that the axial extension of the emission area (18) along the optical axis (7) of the objective lens (6) is by a factor of at least 4 larger than any lateral extension of the excitation area in any transvers direction (30, 31) running transversely to the optical axis (7), and
   - **that** the light sensitive detection area (10) is subdivided into a plurality of light sensitive partial areas (11) in both dimensions of the image plane (8) of the objective lens (6).

15. Fluorescence light microscope (1) of any of the claims 9 to 14, **characterized in that** the light source (12) is configured for expanding the excitation area along the optical axis (7)

   - by shaping the light into a Bessel-beam and/or
   - by shaping the light by means of an Axicon or a prism (35) and/or
   - by superimposed quickly scanning the sample (5) with the light intensity distribution along the optical axis (7).

**Revendications**

1. Procédé pour la détermination d'une distribution de marqueurs de fluorescence (32) dans un échantillon (5), dans lequel les différents marqueurs de fluorescence (32) se trouvent plus près les uns des autres que la limite de diffraction, avec :

   - représentation de l'échantillon (5) dans une direction de représentation (23) sur un détecteur (9), dans lequel une zone de détection photosensible (10), s'étendant transversalement par rapport à la direction de représentation (23), du détecteur (9) est divisée en zones partielles (11),

- sollicitation de l'échantillon (5), à partir d'une direction de sollicitation (25) opposée à la direction de représentation (23), avec une distribution d'intensité lumineuse qui comprend une zone d'émission (18) limité dans l'espace, dans laquelle les marqueurs de fluorescence (32) sont amenés à émettre une lumière de fluorescence, dans lequel une extension axiale de la zone d'émission (18) le long de la direction de représentation (23) est au moins 4 fois plus grande qu'une extension latérale de la zone d'émission (18) dans au moins une direction transversale (30) s'étendant transversalement par rapport à la direction de représentation (23),

- formation de la distribution d'intensité lumineuse dans l'échantillon (5) à partir d'une lumière d'excitation de fluorescence (14) et d'une lumière d'inhibition de la fluorescence (16), dans lequel une distribution d'intensité partielle de la lumière d'inhibition de la fluorescence (16) retreint la zone d'émission (18) dans l'au moins une direction transversale (30) par rapport à une zone d'excitation d'une distribution d'intensité partielle de la lumière d'excitation de fluorescence (14) jusqu'à pas plus de 50 % d'une zone d'excitation à diffraction limitée d'une distribution d'intensité partielle de la lumière d'excitation de fluorescence (14),

- lecture de signaux de lumière de fluorescence à partir des zones partielles (11) du détecteur (9) pour au moins une position relative de la zone d'émission (18) par rapport à l'échantillon (5) et

- analyse des signaux de lumière de fluorescence en ce qui concerne la distribution des marqueurs de fluorescence (32) dans l'échantillon (5),

**caractérisé en ce que**

- avec un élément optique non diffractif (2) disposé entre l'échantillon (5) et le détecteur (9), une fonction de distribution ponctuelle est déformée et/ou déplacée lors de la représentation de l'échantillon (5) dans la direction de représentation (23) sur le détecteur (9) en fonction de l'endroit dans l'échantillon (5) le long de la direction de représentation (23), au moins dans la direction transversale (30) représentée sur le détecteur (9),

- dans lequel, pour l'au moins une position relative de la zone d'émission (18) par rapport à l'échantillon (5), la distribution des marqueurs de fluorescence (32) le long de la direction de représentation (23) est déterminée en analysant les signaux de lumière de fluorescence qui sont lus dans les zones partielles (11) du détecteur (9) qui se trouvent, dans d'au moins une direction transversale (30) représentée sur le détecteur (9), à l'extérieur d'une zone centrale (29) dans laquelle tous les points de la zone d'émission (18) auraient été représentés respectivement avec une fonction de distribution ponctuelle à diffraction limitée minimale non déformée et/ou déplacée par l'élément optique non diffractif (2) dans la direction de représentation (23) sur le détecteur (9).

2. Procédé selon la revendication 1, **caractérisé en ce que** la distribution d'intensité lumineuse partielle de la lumière d'inhibition de la fluorescence (16) restreint la zone d'émission (18) dans l'au moins une direction transversale (30) jusqu'à pas plus de 25 % ou 10 % de la zone d'excitation à diffraction limitée de la distribution d'intensité lumineuse partielle de la lumière d'excitation de la fluorescence (14) et dans lequel la distribution des marqueurs de fluorescence (32) le long de la direction de représentation (23) pour l'au moins une position relative de la zone d'émission (18) par rapport à l'échantillon (5) est déterminée, en option, avec une précision meilleure que lors d'une microscopie à lumière de fluorescence confocale.

3. Procédé selon l'une des revendications précédentes, **caractérisé en ce que**, lors de la détermination de la distribution des marques de fluorescence (32) le long de la direction de représentation (23) pour l'au moins une position relative de la zone d'émission (18) par rapport à l'échantillon (5), une fonction de modélisation est adaptée aux signaux de lumière de fluorescence qui sont lus dans les zones partielles (11) du détecteur (9), dans lequel la fonction de modélisation comprend, en tant qu'argument, la distribution intéressante et affiche la distribution, qui en résulte sur la base de la fonction de distribution ponctuelle effective lors de la représentation de l'échantillon (5) sur le détecteur (9), des signaux de lumière de fluorescence des zones partielles (11) du détecteur (9).

4. Procédé selon l'une des revendications précédentes, **caractérisé en ce que** l'échantillon (5) avec la zone d'émission (18) est balayée dans l'au moins une direction transversale (30) et **en ce que** la distribution des marqueurs de fluorescence (32) le long de l'au moins une direction transversale (30) est déterminée en analysant les signaux de lumière de fluorescence qui sont lus dans les zones partielles (11) du détecteur (9) pour différentes positions relatives de la zone d'émission (18) par rapport à l'échantillon (5) dans l'au moins une direction transversale (30).

5. Procédé selon l'une des revendications précédentes, **caractérisé en ce que** pour l'au moins une position relative de la zone d'émission (18) par rapport à l'échantillon (5), la distribution des marqueurs de fluorescence (32) dans une autre direction transversale (31) s'étendant transversalement par rapport à la direction de représentation (23) et transversalement par rapport à l'au moins une direction transversale (30), en analysant les signaux de lumière de fluorescence qui sont lus dans les zones partielles (11) du détecteur (9) qui sont distribués dans l'autre direction transversale (31) représentée sur le détecteur (9).

6. Procédé selon l'une des revendications 1 à 4, **caractérisé en ce que** l'extension axiale de la zone d'émission (18) le long de la direction de représentation (23) est plus grande d'un facteur d'au moins 4 qu'une autre extension latérale de la zone d'émission (18) dans une autre direction transversale (31) s'étendant transversalement par rapport à la direction de représentation (23) et transversalement par rapport à l'au moins une direction transversale (30), dans lequel, pour l'au moins une position relative de la zone d'émission (18) par rapport à l'échantillon (5), la distribution des marqueurs de fluorescence (32) le long de la direction de représentation (23) est déterminée, en option, en analysant les signaux de lumière de fluorescence qui sont lus dans les zones partielles (11) du détecteur (9) qui se trouvent, dans l'au moins une direction transversale (30) représentée sur le détecteur (9) et dans l'autre direction transversale (31) représentée sur le détecteur (9), à l'extérieur de la zone centrale (29).

7. Procédé selon la revendication 6, **caractérisé en ce que** l'échantillon (5) avec la zone d'émission (18) est balayée dans l'au moins une direction transversale (30) et dans l'autre direction transversale (31) et **en ce que** la distribution des marqueurs de fluorescence (32) le long de l'au moins une direction transversale (30) et de l'autre direction transversale (31) est déterminée en analysant les signaux de lumière de fluorescence qui sont lus dans les zones partielles (11) du détecteur (9) pour différentes positions relatives de la zone d'émission (18) par rapport à l'échantillon (5) dans l'au moins une direction transversale (30) et dans l'autre direction transversale (31), dans lequel, en option, pour la détermination de la distribution des marqueurs de fluorescence (32) le long de l'au moins une direction transversale (30) et de l'autre direction transversale (31), les signaux de lumière de fluorescence lus dans les zones partielles (11) du détecteur (9), qui sont distribuées dans la direction transversale (30, 31) respective sur le détecteur (9) pour la position relative de la zone d'émission (18) par rapport à l'échantillon (5) sont additionnés.

8. Procédé selon l'une des revendications précédentes, **caractérisé en ce que** la zone d'émission (18) est étendue le long de la direction de représentation (23)

- par formation de la lumière en un faisceau de Bessel et/ou
- par formation de la lumière avec un axicon ou un prisme (35) et/ou
- par un balayage rapide superposé de l'échantillon (5) avec la distribution d'intensité lumineuse le long de la direction de représentation (23).

9. Microscope à lumière de fluorescence (1) pour l'exécution du procédé selon l'une des revendications précédentes, avec

- un support d'échantillon (4),
- un objectif (6) avec un axe optique (7),
- un détecteur (9) qui est disposé dans un plan d'image (8) de l'objectif (6) et dont la zone de détection photosensible (10) dans le plan d'image (8) est divisée en plusieurs zones partielles (11), qui génèrent des signaux de lumière de fluorescence,
- une source de lumière (12) qui est conçue pour solliciter un échantillon (5) maintenu par le support d'échantillon (4) avec de la lumière à l'aide de l'objectif (6), dans lequel une distribution d'intensité lumineuse dans l'échantillon (5) est formée, qui comprend une zone d'émission (18) limitée dans l'espace, dans laquelle les marqueurs de fluorescence (32) sont amenés à émettre une lumière de fluorescence (24), dans lequel une extension axiale de la zone d'émission (18) le long de l'axe optique (7) est au moins 4 fois plus grande qu'une extension latérale de la zone d'émission (18) dans au moins une direction transversale (30) s'étendant transversalement par rapport à l'axe optique (7), dans lequel la source de lumière (12) est conçue pour former la distribution d'intensité lumineuse dans l'échantillon (5) à partir de la lumière d'excitation de la fluorescence (14) et de la lumière d'inhibition de la fluorescence (16), dans lequel une distribution d'intensité lumineuse partielle de la lumière d'inhibition de la fluorescence (16) restreint la zone d'émission (18) dans l'au moins une direction transversale (30) jusqu'à pas plus de 50 % d'une zone d'excitation à diffraction limitée d'une distribution d'intensité lumineuse partielle de la lumière d'excitation de fluorescence (14),
- un scanner (22) qui est conçu pour déplacer la zone d'émission (18) par rapport à l'échantillon (5),
- des dispositifs d'enregistrement qui sont conçus pour enregistrer les signaux de lumière de fluorescence pour une position relative respective de la zone d'émission (18) par rapport à l'échantillon (5) et
- des dispositifs d'analyse qui sont conçus pour analyser les signaux de lumière de fluorescence en ce qui concerne la distribution des marqueurs de fluorescence (32) dans l'échantillon (5),

**caractérisé en ce que**

EP 3 899 502 B1

- entre l'objectif (6) et le détecteur (9), est disposé un élément optique non diffractif (2) qui est conçu pour déformer et/ou déplacer une fonction de distribution ponctuelle, lors de la représentation de l'échantillon (5) avec l'objectif (6) dans la direction de représentation (23) sur le détecteur (9) en fonction de l'endroit le long de l'axe optique (7) dans l'au moins une direction transversale (30) et

- les dispositifs d'analyse sont conçus pour déterminer la distribution des marqueurs de fluorescence (32) dans l'échantillon (5) le long de l'axe optique (7) pour la position relative respective de la zone d'émission (18) par rapport à l'échantillon (5) en analysant les signaux de lumière de fluorescence qui ont été générés par les zones partielles (11) du détecteur (9) qui se trouvent, dans l'au moins une direction transversale (30) représentée sur le détecteur (9), à l'extérieur d'une zone centrale (29) dans laquelle tous les points de la zone d'émission (18) auraient été représentés dans la direction de représentation (23) sur le détecteur (9), respectivement avec une fonction de distribution ponctuelle à diffraction limitée minimale non déformée et/ou déplacée par l'élément optique non diffractif (2).

10. Microscope à lumière de fluorescence (1) selon la revendication 9, **caractérisé en ce que** l'élément optique non diffractif (2) est sélectionné parmi des éléments optiques

- qui basculent la fonction de distribution ponctuelle (PSF) par rapport à une symétrie axiale dans l'au moins une direction transversale (30),
- qui génèrent une self-bending PSF,
- qui génèrent une PSF rotative,
- qui génèrent une double helix PSF,
- qui produisent une conical diffraction,
- qui présentent un axicon ou un prisme,
- qui produisent un astigmatisme.

11. Microscope à lumière de fluorescence (1) selon l'une des revendications 9 et 10, **caractérisé en ce que** la source de lumière (12) est conçue de sorte que la distribution d'intensité lumineuse partielle de la lumière d'inhibition de fluorescence (16) restreint la zone d'émission (18) dans l'au moins une direction transversale (30) jusqu'à pas plus de 25 % ou 10 % de la zone d'excitation à diffraction limitée de la distribution d'intensité lumineuse partielle de la lumière d'excitation de la fluorescence (14) et dans lequel les dispositifs d'analyse sont, en option, conçus pour déterminer la distribution des marqueurs de fluorescence (32) le long de la direction de représentation (23) pour la position relative respective de la zone d'émission (18) par rapport à l'échantillon (5) avec une précision meilleure qu'avec une microscopie à lumière de fluorescence confocale.

12. Microscope à lumière de fluorescence (1) selon l'une des revendications 9 à 11, **caractérisé en ce que** les dispositifs d'analyse sont conçus pour adapter, lors de la détermination de la distribution des marqueurs de fluorescence (32) le long de la direction de représentation (23) pour la position relative respective de la zone d'émission (18) par rapport à l'échantillon (5), une fonction de modélisation aux signaux de lumière de fluorescence qui ont été générés par les zones partielles (11) du détecteur (9).

13. Microscope à lumière de fluorescence (1) selon l'une des revendications 9 à 12, **caractérisé en ce que** la zone de détection photosensible (10) est, dans l'au moins une direction transversale (30) représentée sur le détecteur (9), au moins 2 fois plus grande que la zone centrale (29).

14. Microscope à lumière de fluorescence (1) selon l'une des revendications 9 à 13, **caractérisé en ce que**

- la source de lumière (12) est conçue pour former la distribution d'intensité lumineuse dans l'échantillon (5) de sorte que l'extension axiale de la zone d'émission (18) le long de l'axe optique (7) de l'objectif (6) est plus grande d'au moins un facteur 4 que chaque extension axiale de la zone d'excitation dans chaque direction transversale (30, 31) s'étendant transversalement par rapport à l'axe optique (7) et
- la zone de détection photosensible (10) est divisée, dans les deux dimensions du plan d'image (8) de l'objectif (6), en plusieurs zones partielles photosensibles (11).

15. Microscope à lumière de fluorescence (1) selon l'une des revendications 9 à 14, **caractérisé en ce que** la source de lumière (12) est conçue pour étendre la zone d'excitation le long de l'axe optique (7)

- par formation de la lumière en un faisceau de Bessel et/ou
- par formation de la lumière avec un axicon ou un prisme (35) et/ou

- par un balayage rapide superposé de l'échantillon (5) avec la distribution d'intensité lumineuse le long de l'axe optique (7).

**Fig. 1**

**Fig. 2**

Fig. 3

A   Amplitude

Phase

B

**Fig. 4**

A

B

**Fig. 5**

**Fig. 6**

EP 3 899 502 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 8693742 B2
- US 20100278400 A1
- US 9693034 B2
- US 20130147925 A1
- US 20110249866 A1
- DE 10325460 A1
- DE 102005027896 A1
- WO 2015121188 A1
- DE 102015107367 A1

**In der Beschreibung aufgeführte Nicht-Patentliteratur**

- **S. LIU ; H. HUA.** Extended depth-of-field microscopic imaging with a variable focus microscope objective. *Optics Express,* Januar 2011, vol. 19 (1), 353-362
- A new approach to extended focus for high-speed, high-resolution biological microscopy. **S. ABRAHAMSSON et al.** Three-Dimensional and Multidimensional Microscopy: Image Acquisition and Processing XIII. 2006, vol. 6090, 60900N
- **C. J. R. SHEPPARD et al.** Optical Microskopy witht Extended Depth of Field. *Proceedings of the Royal Society of London, Series A, Mathematical and Physical Sciences,* Mai 1983, vol. 387 (1792), 171-186
- The AiryScan Detector from Zeiss, Technical Note. *Jena, Deutschland,* 2015
- **SHEPPARD.** Super-resolution in confocal imaging. *Optik,* 1988, vol. 80, 53